(19) Europäisches Patentamt
European Patent Office
Office européen des brevets

(11) Veröffentlichungsnummer: **0 061 424**
**B1**

(12) # EUROPÄISCHE PATENTSCHRIFT

(45) Veröffentlichungstag der Patentschrift: **03.09.86**

(21) Anmeldenummer: **82810110.5**

(22) Anmeldetag: **12.03.82**

(51) Int. Cl.⁴: **B 01 D 13/04,** C 08 J 5/22, C 08 G 75/20, C 08 G 65/48, B 01 D 13/00, C 02 F 1/44

(54) **Modifizierte Polysulfone enthaltende semipermeable Membranen, Verfahren zu ihrer Herstellung und ihre Verwendung.**

(30) Priorität: **17.03.81 CH 1809/81**

(43) Veröffentlichungstag der Anmeldung: **29.09.82 Patentblatt 82/39**

(45) Bekanntmachung des Hinweises auf die Patenterteilung: **03.09.86 Patentblatt 86/36**

(84) Benannte Vertragsstaaten: **BE CH DE FR GB IT LI NL SE**

(56) Entgegenhaltungen:
**EP-A-0 008 945**
**EP-A-0 025 973**
**EP-A-0 026 399**
**EP-A-0 047 953**
**DE-A-2 232 204**
**DE-A-2 524 332**
**US-A-3 886 066**
**US-A-4 029 582**

**PATENTS ABSTRACTS OF JAPAN, Band 5, Nr. 8, 20. Januar 1981, Seite (C-39)(680);**
**INDUSTRIAL AND ENGINEERING CHEMISTRY; PROCESS DESIGN AND DEVELOPMENT, Band 11, Nr. 2, April 1972, Seiten 226-228, Washington (USA); E. HOFFER et al.: "Ion separation by hyperfiltration through charged membranes. II. Separation performance of *collodion-polybase membranes*".**
**W. Pusch und A. Walch, Synthetische Membranen,**

(73) Patentinhaber: **ALIGENA AG, Freie Strasse 103, CH-4051 Basel (CH)**

(72) Erfinder: **Linder, Charles, Dr., 20 Derech Yavneh, Rehovot (IL)**
Erfinder: **Aviv, Gershon, Dr., 42 Burla St., Tel Aviv (IL)**
Erfinder: **Perry, Mordechai, Dr., 32 Sokolov Street, Petach Tikvah (IL)**
Erfinder: **Kotraro, Reuven, Derech Yavneh 11, Rehovot (IL)**

(74) Vertreter: **Becher, Pauline, Dr., A. Braun, Braun, Héritier, Eschmann AG Patentanwälte Holbeinstrasse 36-38, CH-4051 Basel (CH)**

(56) Entgegenhaltungen: (Fortsetzung)
**Herstellung, Struktur und Anwendung, Angew. Chemie 94, 670-695 (1982)**
**H. Strathmann, Trennung von molekularen Mischungen mit Hilfe synthetischer Membranen, Darmstadt (1979), S. 134-138**
**R.Rautenbach und R.Albrecht, Membrantrennverfahren, Otto Salle Verlag, (1981), S.23-33.**

**EP 0 061 424 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft verbesserte semipermeable Membranen für Diffusionsverfahren, wie z.B. für Umkehrosmoseverfahren (UO) oder Ultrafiltrationsverfahren (UF). Insbesondere betrifft die vorliegende Erfindung Membranen, die durch chemische Modifikation von Polysulfonen hergestellt werden und eine gute Stabilität gegen z.B. Lösungsmittel und mechanischen Druck, aber auch ein verbessertes Durchflussvermögen (Flux) und verbesserte Rückhalteeigenschaften zeigen.

Die erfindungsgemässen Membranen enthalten im allgemeinen einen dünnen vernetzten und hydrophilen Film, der chemisch an eine etwas dickere, vernetzte und Poren mit grösserer Oeffnung enthaltende Membran gebunden ist. Der dünne hydrophile Film verbessert die Rückhalteeigenschaften der Membran und erhöht die Trennkapazität bei der Trennung einwertiger niedermolekularer Salze von mehrwertigen Salzen oder höhermolekularen Verbindungen.

Die Vernetzung der einzelnen Bestandteile der Membran sowie auch ihre Vernetzung untereinander verleiht der Membran die angegebene Stabilität gegen Lösungsmittel und mechanischen Druck und verhindert ausserdem ein Abtrennen einzelner Schichten innerhalb der Membran.

Als Kompositmembranen kennt man aus der Literatur poröse Träger, die mit dünnen hydrophilen Filmen beschichtet,(z.B. mit wasserlöslichen Aminen, die oberflächlich adsorbiert werden(-US-A-4 125 462 -) oder beschichtet und mit hydrophoben Vernetzungsmitteln vernetzt sind und z.B. als UO-Membranen, die ein gutes Salzrückhaltevermögen aufweisen, geeignet sind (US-A-3 951 815, US-A-4 039 440, GB-A-1 558 807, GB-A-2 027 614). Hergestellt werden diese Membranen unter Verwendung von wasserunlöslichen Vernetzungsmitteln in mit Wasser nicht mischbaren Lösungsmitteln, die den dünnen hydrophilen Film nicht angreifen. Der Film kann eine Dicke von 100 bis 1000 nm, vorzugsweise von 200 bis 800 nm aufweisen. Die Haftung dieses Films auf der porösen Membran erfolgt durch physikalische oder mechanische Kräfte (z.B. teilweise Diffusion des Filmmaterials in die Poren des Trägers). Unter diesen Umständen ist ein Ablösen der Filmschicht leicht möglich und wie die Praxis gezeigt hat, geschieht dies auch.

Ein weiterer Nachteil dieser bekannten Kompositmembranen besteht darin, dass sie aus Polymeren (Polysulfonen, Polyvinylfluoriden, Polycarbonaten) hergestellt sind, die lösungsmittelempfindlich sind, d.h. in nichtwässerigen Lösungsmitteln aufgelöst werden können.

Die EP-A-8945 bestätigt schliesslich die obigen Anmerkungen zu den Kompositmembranen. Gemäss dieser Literaturstelle werden Kompositmembranen hergestellt, indem man auf ein Polyesterstützgewebe als Träger ein Polysulfon aufbringt und eine mikroporöse Schicht ausbildet. Anschliessend bringt man eine weitere Schicht aus einem chemisch modifizierten Polysulfon - erhalten z.B. durch Umsetzung eines in der Polymerkette unsubstituierten Polyarylsulfons mit Chlorsulfonsäure und Piperidin - auf die mikroporöse Polysulfonschicht auf. Anschliessend findet eine Vernetzung mit einem Gemisch aus Isophthalsäure- und Trimesinsäurechlorid, die in n-Hexan gelöst sind, statt. Die erhaltenen Kompositmembranen zeigen ein gutes Substanzrückhaltevermögen.

Die erfindungsgemässen Membranen, die keine Kompositmembranen sind, werden durch eine andere Kombination chemischer Modifikationsschritte erhalten und weisen demgemäss auch ganz andere Eigenschaften auf.

Die Aufgabe der vorliegenden Erfindung ist es, verbesserte semipermeable Membranen mit guter chemischer und mechanischer Stabilität herzustellen, um so die Nachteile der bekannten Membranen zu überwinden.

Es wurde nun gefunden, dass man diese Nachteile durch die Bereitstellung der erfindungsgemässen Membranen weitgehend überwinden kann.

Bei den erfindungsgemässen Membranen ist die Gefahr eines Ablösens von Schichten oder ein Auflösen der Membran (Lösungsmittelempfindlichkeit) auf ein Minimum reduziert.

Ausserdem ist die aufgebrachte hydrophile Filmschicht dünner als die bekannten UO-Membranen (vorzugsweise werden monomolekulare Schichten oder Schichten bis zu einer Dicke von 100 nm aufgebracht; die Dicke der bekannten Schichten liegt etwa zwischen 100 und 500 nm). Ferner kann die Vernetzung der Filmschicht in mit wasserlöslichen multifunktionellen Verbindungen in einemhydrophilen Lösungsmittel (z.B. Wasser) durchgeführt werden.

Die erhaltenen Membranen sind geeignete UF-, UF-UO-Zwischenmembranen (weisen Eigenschaften auf, die zwischen denen der UO- und UF-Membranen liegen) oder UO-Membranen und können z.B. bei Drücken von $2.10^5$ Pa bis $10^7$ Pa und Trenngrenzen (cut-offs) von 200 bis 2000 (Molekulargewichtseinheiten) eingesetzt werden.

Gegenstand der vorliegenden Erfindung sind nun semipermeable Membranen aus Polysulfonen, dadurch gekennzeichnet, dass sie aus membranbildenden modifizierten Polysulfonen mit wiederkehrenden Einheiten der Formel

(1) $-\!\!\left[M_1 - R_1 - M_2 - R_2 - SO_2 - R_3\right]\!\!-$

bestehen, worin $M_1$ und $M_2$ unanhängig voneinander eine direkte chemische Bindung, -O- oder -NH- bedeuten $R_1$ eine direkte chemische Bindung oder ein Brückenglied der Formeln

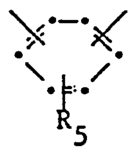 oder 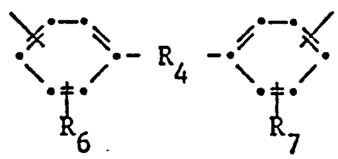

ist, wobei - wenn $R_1$ die direkte chemische Bindung ist - $M_1$ und $M_2$ die angegebenen Bedeutungen haben, jedoch nicht gleichzeitig -O- sind, $R_2$ und $R_3$ unabhängig voneinander Brückenglieder der Formeln

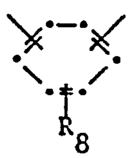 oder 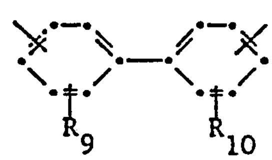

sind, die Arylenreste $R_1$, $R_2$ und $R_3$ gegebenenfalls mit Alkyl mit 1 bis 4 Kohlenstoffatomen weitersubstituiert sind, $R_4$ eine direkte chemische Bindung, -O-, Alkylen mit 1 bis 4 Kohlenstoffatomen, gegebenenfalls substituiert mit oder unterbrochen durch Cycloalkyl(en) oder Aryl(en) mit höchstens 7 Kohlenstoffatomen, oder Alkenylen mit 2 bis 4 Kohlenstoffatomen ist, $R_5$ bis $R_{10}$ unabhängig voneinander Wasserstoff oder $-R_{11}NH_2$,

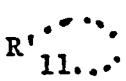

NH oder $-R_{13}OH$, chemisch modifiziert durch Umsetzung mit

a) einer monomeren Verbindung mit mindestens zwei funktionellen Gruppen,

b) einem polyfunktionellen geradkettigen oder verzweigten Oligomer oder Polymer, und

c) einer nichtionischen oder ionischen Verbindung mit mindestens einer, vorzugsweise zwei, zur Reaktion mit b) befähigten Gruppe(n),

$-R_{12}X$ oder $-R_{13}CHO$, chemisch modifiziert durch Umsetzung mit den Komponenten b) und c), oder

$-R_{13}$ CN sind, chemisch modifiziert durch Reaktion mit Hydroxylamin sowie den Komponenten a), b) und c),

$-R_{11}-$ eine direkte chemische Bindung, $-(CH_2)_pNH(CH_2)_{2-6}-$, $(CH_2)_p-O-(CH_2)_{2-6}$, $-N=N$

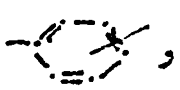

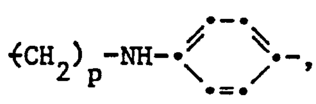, 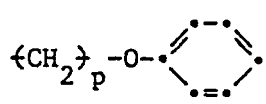 oder 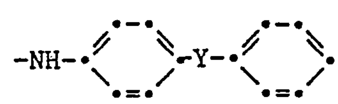

ist,

$-R'_{11}$ die Atome darstellt, die zur Bildung eines heterocyclischen Rings notwendig sind, der an die Polymerkette ankondensiert ist,

$-R_{12}$ $-C_nH_{2n}-$, $R_{13}$ eine direkte chemische Bindung oder $-C_mH_{2m}-$, X Halogen, Y -O-, $-SO_2-$ oder $C(CH_3)_2$, n eine ganze Zahl von 1 bis 6, m eine ganze Zahl von 1 bis 5 und p Null oder 1 ist, und der Substitutionsgrad der von Wasserstoff verschiedenen Substituenten $R_5$ bis $R_{10}$ zwischen 0,3 und 3,5 Milliäquivalenten/g liegt.

Die Membranen haben vor der Modifikation in der Regel Poren mit mittleren durchschnittlichen Durchmessern von 1 bis 500 nm, vorzugsweise 1 bis 100 nm und insbesondere 2 bis 20nm. Nach der Modifikation haben die erfindungsgemässen Membranen mittlere Durchmesser von ungefähr 0,1 bis 20 nm, wobei die Bereiche von 0,5 bis nm, bzw. 1 bis 8 nm bevorzugt sind.

Ein anderer Gegenstand der vorliegenden Erfindung ist die aus dem modifizierten Polysulfon bestehende Membran, die als Film auf einen(m) porösen Träger gegossen (gebunden) ist.

Weitere Gegenstände der vorliegenden Erfindung sind Verfahren zur Herstellung der erfindungsgemässen Membranen sowie ihre Verwendung auf dem Gebiet der Konzentrierung und Reinigung von Flüssigkeiten (Lösungen), z.B. bei der Entsalzung von Lösungen organischer Verbindungen (Farbstoffen) oder bei der Abwasserreinigung. Da es sich bei den erfindungsgemässen Membranen um vernetzte Membranen handelt, kann man sie für die angegebenen Zwecke auch für Lösungen mit relativ hohem Anteil an organischen Lösungsmitteln einsetzen.

Diese und andere Gegenstände der vorliegenden Erfindung werden nachfolgend weiter erläutert.

$M_1$ und $M_2$ in Formel (1) sind unabhängig voneinander eine direkte chemische (kovalente) Bindung, insbesondere eine Einfachbindung, ferner -O- oder -NH-. Die Gruppierung $-M_1-R_1-M_2-$ kann - wenn $R_1$ die direkte chemische Bindung ist (kein Arylenrest), z.B. die Gruppierungen -NH-NHoder -O-NH- umfassen, wobei die Gruppierung -O-O- jedoch ausgeschlossen sein soll.

Wenn $R_4$ Alkylen mit 1 bis 4 Kohlenstoffatomen ist, kommen z.B. $-CH_2-$, $-CH_2CH_2-$ $(CH_2)_4$ und insbesondere

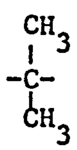

infrage; diese Brückenglieder können mit (durch) Cycloalkyl(en), insbesondere Cyclopentyl(en) oder Cyclohexyl(en) oder Aryl(en), insbesondere Phenyl(en) oder Benzyl(en) substituiert oder unterbrochen sein. Ist $R_4$ Alkenylen, so kommen z.B. $-CH=CH-$ oder $-CH_2-CH=CH-CH_2-$ in Betracht.

Bevorzugte Bedeutungen von $R_4$ sind die direkte Bindung,-O-oder

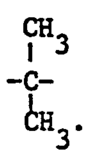

Bevorzugter Alkylrest ($C_1$-$C_4$) an den Arylenresten $R_1$, $R_2$ und $R_3$ ist Methyl.

X in der Bedeutung Halogen ist insbesondere Cl, Br, J, wobei Cl bevorzugt ist.

$R'_{11}$ stellt bevorzugt die Atome dar, die zur Bildung von heterocyclischen 5- oder 6-gliedrigen Ringen notwendig sind und als weitere Heteroatome (neben dem Stickstoffatom) Sauerstoff- oder insbesondere weitere Stickstoffatome enthalten; von besonderem Interesse ist der Imidazolonring, der an die Polymerkette ankondensiert ist.

Von besonderem Interesse sind nun Membranen von modifizierten Polysulfonen und wiederkehrenden Einheiten der Formel (I), die die folgenden wiederkehrenden Einheiten der Formeln

$$(2) \quad \left[ M_1 - R_1 - M_2 - R_2 - SO_2 - R_3 \right],$$

$$(3) \quad \left[ O - R_2 - SO_2 - R_3 \right] \text{ oder}$$

$$(4) \quad \left[ R_1 - O - R_2 - SO_2 - R_3 \right]$$

auweisen, worin $M_1$ und $M_2$ -O- oder -NH- sind und $R_1$, $R_2$ und $R_3$ die angegebenen Bedeutungen haben. Bevorzugt sind solche Membranen mit wiederkehrenden Einheiten der Formel (2), die wiederkehrende Einheiten der Formel

$$(5) \quad \left[ O - R_1 - O - R_2 - SO_2 - R_3 \right]$$

aufweisen, worin $R_1$ ein Brückenglied der Formeln

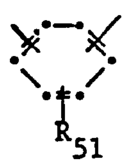 oder 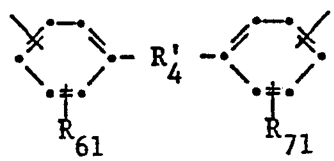

ist, $R_2$ und $R_3$ unabhängig voneinander Brückenglieder der Formeln

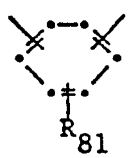 oder 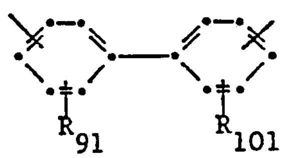

sind, $R'_4$ eine direkte chemische Bindung oder Alkylen mit 1 bis 4 Kohlenstoffatomen ist, $R_{51}$ bis $R_{101}$ unabhängig voneinander Wasserstoff oder
$-CH_2NH_2$, $-N = N-$

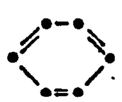

$-NH_2$ $-CH_2OH$ oder $-NH_2$ chemisch modifiziert durch Umsetzung mit den Komponenten (a), (b) und (c),
$-CH_2X$, worin X Halogen ist, chemisch modifiziert durch Umsetzung mit den Komponenten (b) und (c) oder
$-CH_2CN$ sind, chemisch modifiziert durch Reaktion mit Hydroxylamin sowie den Komponenten (a), (b) und (c), und der Substitutionsgrad der von Wasserstoff verschiedenen Substituenten $R_{51}$ bis $R_{101}$ zwischen 0,3 und 3,5 Milliäquivalenten/g liegt.

Besonders bevorzugt sind Membranen von modifizierten Polysulfonen mit wiederkehrenden Einheiten der Formel

(6) 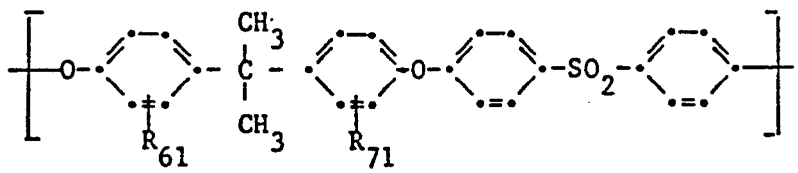

worin $R_{61}$ und $R_{71}$ die angegebenen Bedeutungen haben und der Substitutionsgrad der von Wasserstoff verschiedenen Substituenten $R_{61}$ und $R_{71}$ zwischen 0,3 und 3,5 Milliäquivalenten/g liegt.

Bevorzugte Membranen von modifizierten Polysulfonen mit Struktureinheiten der Formel (6)sind solche, in denen $R_{61}$ und $R_7$ Chlormethyl ist, wobei der Substitutionsgrad etwa zwischen 0,9 und 2,6 liegt und wobei diese Chlormethylgruppen durch Umsetzung mit (b) und (c) modifiziert sind. Die bevorzugten Komponenten (b) sind Polyäthylenimine, Polyvinylamine oder Kondensationsprodukte aus Dicyandiamid, Ammoniumchlorid und Formaldehyd, während als Komponente (c) Reaktivfarbstoffe mit reaktiven Triazin- oder Pyrrimidylresten, die mindestens zwei reaktive Halogen-(chlor)atome enthalten, oder farblose Triazin- oder Pyrimidinderivate, substituiert mit zwei reaktiven Halogenatomen, bevorzugt sind.

Bei den nicht-modifizierten Polysulfonen, die gemäss vorliegender Erfindung modifiziert werden, handelt es sich teils um handelsübliche und teils um solche Polymere, deren Synthese literaturbekannt ist. Diese Polymeren müssen sich zu Filmen vergiessen lassen und sollten reaktive Gruppen enthalten oder letztere sollten leicht in die Polymeren eingebaut werden können.

Das Molekulargewicht dieser Polymeren kann etwa im Bereich von 5000 bis 60 000 liegen, bevorzugt wird in der Regel ein Bereich von 20 000 bis 40 000.

Im einzelnen seien Polysulfone mit den folgenden wiederkehrenden Einheiten genannt:

(7) 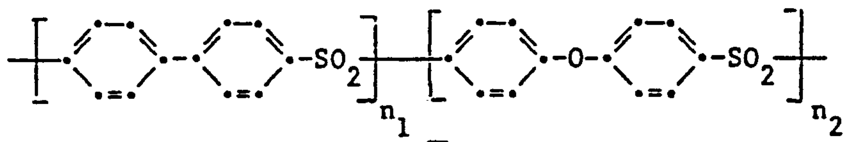 $n_1 > n_2$

(8) 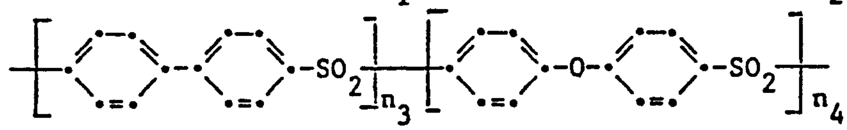 $n_4 > n_3$

(9) 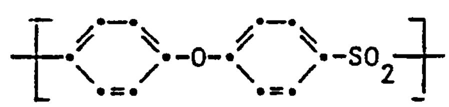

(10) 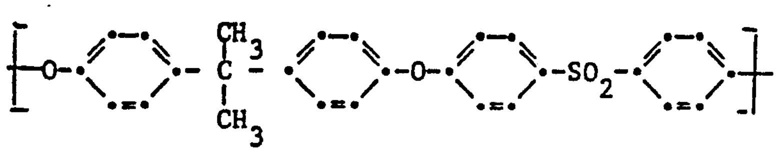

Ferner:

(11) 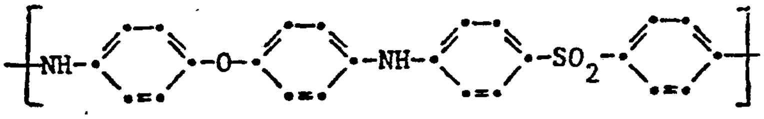

(12) 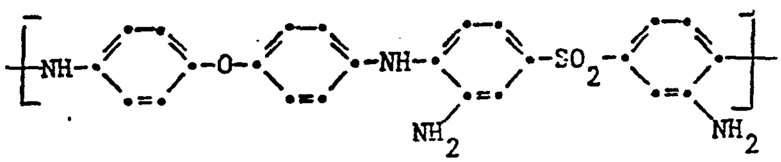

(13) 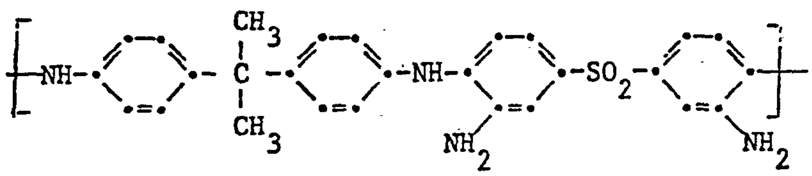

(14) 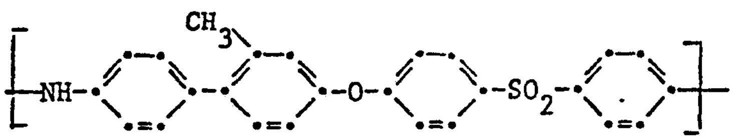

(15) 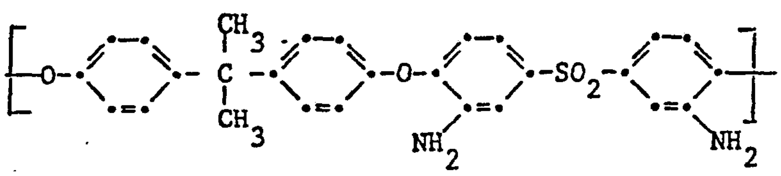

(16) 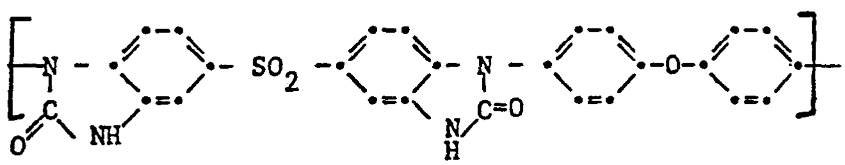

In die Arylenreste der Polysulfone kann man leicht die verschiedensten funktionellen Gruppen einbauen, wobei diese Reaktivgruppierungen bereits vor der Polymerisation (in die Monomeren) oder auch in die Polymeren, bevor sie zu Membranen vergossen werden, eingebaut werden können.

Eine andere Möglichkeit betrifft die Einführung der funktionellen Gruppen durch Reaktion in die Giesslösung selbst. Ferner können diese Reaktivgruppierungen auch noch in die Polymeren eingebaut werden, wenn diese schon als fertige (gegossene) Membranen vorliegen.

Eine Kombination aus diesen möglichen Verfahren (Teilreaktionen in verschiedenen Verarbeitungszuständen - Monomer - Polymer - Membran) ist ebenfalls ein gangbarer Weg. Die reaktiven Gruppen können in andere Gruppen (z.B. $-CH_2Cl \rightarrow -CH_2NH_2$ oder $-CH_2OH$) umgewandelt werden, ehe man sie der erfindungsgemässen Modifikation unterwirft.

Manchmal ist es auch angebracht, nur die Reaktivgruppierungen an der Oberfläche oder in den Poren der Membran zu modifizieren und die Gruppierungen in der übrigen Membran unverändert zu lassen.

Für die Herstellung der erfindungsgemässen Membranen bieten sich nun zwei Hauptalternativen an: entweder man giesst ein Polysulfon, das keinerlei Reaktivgruppierungen hat, zu einer Membran und führt die chemische Modifikation auf der Membran durch oder man verwendet Polysulfone mit reaktiven Gruppierungen (insbesondere $-CH_2Cl$, $-CH_2NH_2$), giesst aus diesen eine Membran und führt dann die weitere chemische Modifikation durch.

Gegenstand der vorliegenden Erfindung ist daher auch ein Verfahren zur Herstellung der erfindungsgemässen Membranen, das dadurch gekennzeichnet ist, dass man auf ein (poröses) Trägermaterial eine Lösung zu einer Membran vergiesst, die

(I) ein membranbildendes Polysulfon mit wiederkehrenden Einheiten der Formel

$$(17)\quad -\!\!\left[ M_1 - R'_1 - M_2 - R'_2 - SO_2 - R'_3 \right]\!\!-,$$

worin $M_1$ und $M_2$ unabhängig voneinander eine direkte chemische Bindung, -O- oder -NH- sind, $R'_1$ eine direkte chemische Bindung oder ein Brückenglied der Formeln

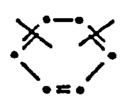 oder 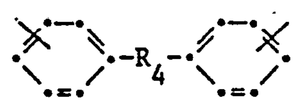

ist, wobei - wenn $R_1'$ die direkte chemische Verbindung ist - $M_1$ und $M_2$ die angegebenen Bedeutungen haben, jedoch nicht gleichzeitig -O- sind, $R'_2$ und $R'_3$ unabhängig voneinander Brückenglieder der Formeln

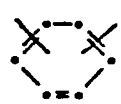 oder 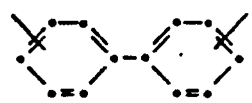

sind, die Arylenreste $R'_1$, $R'_2$ und $R'_3$ gegebenenfalls mit Alkyl mit 1 bis 4 Kohlenstoffatomen substituiert sind, $R_4$ eine direkte chemische Bindung, -O-, Alkylen mit 1 bis 4 Kohlenstoffatomen, gegebenenfalls substituiert oder unterbrochen mit (durch) Cycloalkyl(en) oder Aryl(en) mit höchstens 7 Kohlenstoffatomen, oder Alkenylen mit 2 bis 4 Kohlenstoffatomen ist, und

II) ein polares organisches Lösungsmittel oder Lösungsmittelgemisch für das Polysulfon sowie gegebenenfalls Teillösungsmittel, Nicht-Lösungsmittel, Elektrolyte und/oder oberflächenaktive Hilfsmittel enthält, die (nicht-koagulierte) Membran dann mit einem Lösungsmittel, das mit dem polaren Lösungsmittel mischbar, aber ein Nichtlösungsmittel für die Membran ist, in Kontakt bringt, um die Membran zu koagulieren, in die so erhaltene Membran

-(A) $-R_{11}-NH_2$ oder $-R_{13}OH$ Substituenten einführt und diese dann chemisch modifiziert durch Umsetzung mit

(a) einer monomeren Verbindung mit mindestens zwei funktionellen Gruppen,

(b) einem polyfunktionellen geradkettigen oder verzweigten Oligomer oder Polymer und

(c) einer nicht-ionischen oder ionischen Verbindung mit mindestens einer, vorzugsweise zwei, zur Reaktion mit (b) befähigten Gruppe(n),

-(B) - $R_{12}X$ oder $-R_{13}CHO$ Substituenten einführt und diese dann chemisch modifiziert durch Umsetzung mit den Komponenten (b) und (c) oder

-(C) $-R_{12}CN$ Substituenten einführt und diese dann chemisch modifiziert durch Umsetzung mit Hydroxylamin und den Komponenten (a), (b) und (c), worin $R_{11}$, $R_{12}$, $R_{13}$ und X die angegebenen Bedeutungen haben.

Gegenstand der vorliegenden Erfindung ist ferner ein zweites Verfahren, das dadurch gekennzeichnet ist, dass man auf ein (poröses) Trägermaterial eine Lösung zu einer Membran giesst, die

(I) ein membranbildendes Polysulfon mit wiederkehrenden Einheiten der Formel

$$(18)\quad -\!\!\left[ M_1 - R''_1 - M_2 - R''_2 - SO_2 - R''_3 \right]\!\!-,$$

worin $M_1$ und $M_2$ unabhängig voneinander eine direkte chemische Bindung, -O- oder -NH sind, $R''_1$ eine direkte chemische Bindung oder ein Brückenglied der Formeln

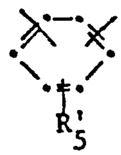 oder 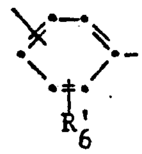 - $R_4$ - 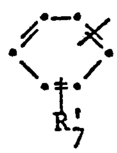 ist,

wobei, wenn $R_1''$ die direkte chemische Bindung ist, $M_1$ und $M_2$ die ange gebenen Bedeutungen haben, jedoch nicht gleichzeitig -O- sind,-$R''_2$ und $R''_3$ unabhängig voneinander Brückenglieder der Formeln

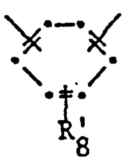 oder 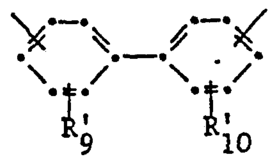

sind, die Arylenreste $R_1''$, $R_2''$ und $R_3''$ gegebenenfalls mit Alkyl mit 1 bis 4 Kohlenstoffatomen substituiert sind, $R_4$ eine direkte chemische Bindung, -O-, Alkylen mit 1 bis 4 Kohlenstoffatomen, gegebenenfalls substituiert oder unterbrochen mit (durch) Cycloalkyl(en) oder Aryl(en) mit höchstens 7 Kohlenstoffatomen oder Alkenylen mit 2 bis 4 Kohlenstoffatomen ist, $R'_5$ bis $R'_{10}$ unabhängig voneinander Wasserstoff, (A) -$R_{11}NH_2$,

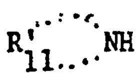,

oder -$R_{13}OH$,
(B) -$R_{12}X$ oder -$R_{13}CHO$ oder
(C) -$R_{13}CN$, worin $R_{11}$, $R'_{11}$, $R_{12}$, $R_{13}$ und X die angegebenen Bedeutungen haben und der Substituitionsgrad der von Wasserstoff verschiedenen Substituenten $R'_5$ bis $R'_{10}$ zwischen 0,3 und 6 Milliäquivalenten/g liegt, und
(II) ein polares organisches Lösungsmittel oder Lösungsmittelgemisch für das Polysulfon sowie gegebenenfalls Teillösungsmittel, Nicht-Lösungsmittel, Elektrolyte und/oder oberflächenaktive Hilfsmittel enthält, die (nicht-koagulierte) Membran dann mit einem Lösungsmittel, das mit dem polaren Lösungsmittel mischbar, aber ein Nichtlösungsmittel für die Membran ist, in Kontakt bringt, um die Membran zu koagulieren, und die so erhaltene Membran dann chemisch modifiziert durch Umsetzung mit
(a) einer monomeren Verbindung mit mindestens zwei funktionellen Gruppen,
(b) einem polyfunktionellen, geradkettigen oder verzweigten Oligomer oder Polymer und
(c) einer nichtionischen oder ionischen Verbindung mit mindestens einer, vorzugsweise zwei, zur Reaktion mit (b) befähigten Gruppe(n), sofern $R'_5$ bis $R'_{10}$ die Bedeutung von (A) haben,
-durch Umsetzung mit den Komponenten (b) und (c), sofern $R'_5$bis $R'_{10}$ die Bedeutung von (B) haben, und
-durch Umsetzung mit Hydroxylamin sowie den Komponenten (a), (b) und (c), sofern $R_5'$ bis $R'_{10}$ die Bedeutung von (C) haben.
Von den Reaktivgruppierungen, die in der Ausgangsmembran bereits vorhanden sind oder in diese eingeführt werden, sind insbesondere Amino (-$NH_2$ oder -N=N-

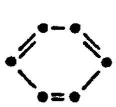

-$NH_2$), Hydroxyl (-OH), Cyano (-CN), Thiocyano (-SCN), die Aldehyd- (-CHO), Oxiran-

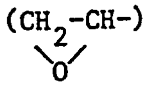

oder Vinylgruppen ($-CH=CH_2$) sowie die Halogenatome (F, Cl, Br, J) zu nennen. Besonders bevorzugt sind die Halogenatome, die z.B. als Chlormethyl ($-CH_2Cl$) oder Brommethyl ($-CH_2Br$) vorliegen, sowie die Aminogruppe ($-NH_2$ oder $-CH_2NH_2$).

Diese Reaktivgruppierungen können als Substituenten der Polymeren vorliegen oder selbst einen Teil der Polymeren (backbone) bilden. Sie können durch Polymerisation geeigneter (substituierter) Monomere in das Polymer gelangen oder auch erst in das vorliegende Polymer eingeführt werden.

Die Einführung der Reaktivgruppierungen in das Polysulfon (die Polysulfonkette) vor oder nach dem Vergiessen zu einer Membran kann nach bekannten und üblichen chemischen Verfahren durchgeführt werden.

Die Halomethylierung wird z.B. bevorzugt durch Reaktion mit Chlormethylmethyläther oder mit Paraformaldehyd und Chlorwasserstoffgas und/oder konzentrierter Salzsäure in Gegenwart eines Metallsalzes insbesondere von Zinkchlorid (US-A-3 984 399, Beispiel 2) erreicht. Die Chlormethylgruppe ($-CH_2Cl$) kann dannleichtweiter umgesetzt werden mit z.B. Ammoniak, Aminen, Aminoalkoholen, Diaminen, Alkalimetallhydroxiden oder Cyaniden, un reaktive Gruppen, die endständig Amino-, Hydroxyl-, Nitril- oder Formylreste aufweisen, für die weitere chemische Modifikation mit den Komponenten (α), (b) und (c) oder anderen Kombinationen dieser Komponenten zu haben.

Man kann auch mit Polysulfonen starten, die an $R_1$, $R_2$ und $R_3$ (sofern Arylenreste) alkylsubstituiert sind, wobei die Alkylreste z.B. 1 bis 6 Kohlenstoffatome enthalten und Methyl bevorzugt ist, diese dann bromieren oder insbesondere chlorieren (N-Bromsuccinimid, Benzoylperoxyd), um die entsprechenden Halogenalkylsubstituenten zu bilden, die dann der chemischen Modifikation wie oben angegeben unterworfen werden können.

Ein anderes Verfahren zur Einführung von reaktiven Aminfunktionen ist die direkte Amido-methylierung gemäss A.R. Mitchell, Tetrahedron Letters 42, 3795-3798.

Ferner ist auch die Kupplung mit Diazoniumverbindungen, die weitere Reaktivgruppierungen ($-NH_2$, $-OH$) enthalten, möglich (diazotierte Phenylen-diamine).

In einem weiteren Verfahren kann man die aromatischen Polysulfone (auch in Membranform) nitrieren (mit z.B. $HNO_3/H_2SO_4$ Mischungen), die Nitrogruppen dann zu Aminogruppen reduzieren (Na-Dithionit) und dann diese Aminogruppen wie angegeben mit den Komponenten (a), (b) und (c) modifizieren.

Als Beispiel für die Einführung von Reaktivgruppierungen in das fertige Polymere sei die Halogenmethylierung genannt, die zu einem Polymer mit wiederkehrenden Einheiten der Formel

(19) 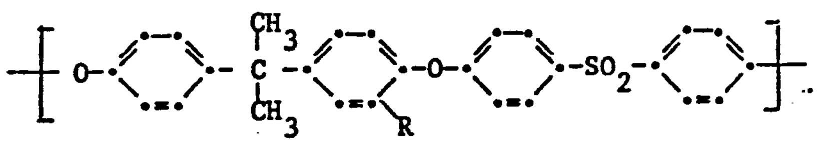

führt, worin R $-CH_2X$ und X F, Cl, Br oder J, vorzugsweise jedoch Br oder Cl ist (US-A-4 029 582).

Die Halogenmethylgruppe kann nach bekannten chemischen Methoden z.B. in die folgenden Gruppierungen überführt werden:

$-CH_2NH_2$, $-CH_2NH(CH_2)_{2-6}NH_2$, $-CH_2O(CH_2)_{2-6}NH_2$, $-CH_2NH-$

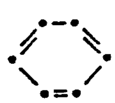

-NH, $-CH_2-$

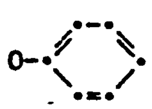

$-NH_2$, $-CH_2CH$, -CHO,.CH2Oh oder $-CH_2OR_aX_a$, worin $R_a$ Alkylen oder $C_2$-$C_6$-Arylen (Phenylen) und $X_a$ -CN, -CHO oder-OH ist.

Als Beispiel für ein Polymer, das aus Monomeren mit reaktiven Gruppierungen hergestellt wurde, sei das Polysulfon mit wiederkehrenden Einheiten der Formel

(20) 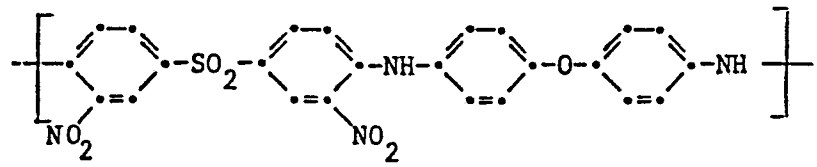

genannt. Es wird durch Kondensation von 3,3'-Dinitro-4,4'-Dichlordi-phenylsulfon mit 4,4'-Diaminodiphenyläther erhalten (Desalination 21, 183-194 (1977)). Die Nitrogruppen können zu Aminogruppen reduziert und weiter zur Einführung anderer Reaktivgruppierungen verwendet werden (Halogenalkyl, Hydroxyl, Nitril).

Der Gehalt an reaktiven Gruppen in der Membran ist abhängig von dem Herstellungsverfahren zur Einführung dieser Gruppen, aber auch von der Veränderung der Membran durch diese Gruppen (z.B. Wasserlöslichkeit und Sprödigkeit der Membran). So können z.B. $-CH_2Cl$-Gruppen in einer Menge von 0,3 bis 3,5 mäq/g in eine Polysulfonmembran eingeführt werden, während ein Amino($-NH_2$)-gehalt von über etwa 2,0 mäq/g (Bereich 0,3 bis 2,0 mäq/g) die Polymeren schwerer löslich macht und nur wenig quellbare Membranen liefert. Höhere Amingehalte können jedoch gegebenenfalls über chlormethylierte Polysulfone (2,5 mäq/g) und Austausch des Chloratoms durch $-NH_2$ erreicht werden.

WVenn di- oder polyfunktionelle Amine verwendet werden, erfolgt gleichzeitig eine Vernetzung der Membran.

Durch nukleophilen Austausch des Halogenatoms in der $-CH_2Cl$ Gruppe mit $CN^{\ominus}$ erhält man $-CH_2CN$ Gruppen, deren Gehalt vorzugsweise nicht über 1,5 mäq/g steigen sollte um die Membranen nicht zu spröde zu machen.

Eine solche Reaktion sollte vorzugsweise nur an der Oberfläche oder in den Poren der Membran durchgeführt werden, da dann das Problem der Sprödigkeit gemindert werden kann.

Die Aldehydgruppe (-CHO) kann durch Alkalibehandlung ($NaHCO_3$) eines chlormethylierten Polysulfons bei höheren Temperaturen (140°C) eingeführt werden (J. Frechet, C. Schuerch, JACS93, 492 (1971)).

Die Konzentration der Reaktivgruppierungen kann auch sehr viel höher sein, z.B. 0,3 bis 6,0 mäq/g, wenn die Polymeren aus z.B. Monomeren, die diese Reaktivgruppierungen bereits enthalten, hergestellt werden. So beträgt z.B. der Amin-($NH_2$)gehalt im Polysulfon der Formel (12) 5,8 mäq/g.

Bei der nachfolgenden Modifikation werden jedoch nicht alle diese Gruppierungen in eine chemische Reaktion mit einbezogen, so dass die Konzentration der tatsächlich an der Reaktion beteiligten Gruppen im oben angegebenen Bereich liegt. Eine gewisse Kontrolle der Reaktion ist notwendig, um eine übermässige Vernetzung und die Neigung zur Sprödigkeit der Membranen zu vermeiden.

Die untere Grenze der Konzentration an Reaktivgruppierungen wird durch die Notwendigkeit einer gewissen Vernetzung der Polymeren und die Bereitstellung von reaktiven Zentren für die weiteren Modifikationsschritte gegeben. Sie ist von der jeweiligen Reaktivgruppierung und dem Molekulargewicht des hydrophilen Oligomers bzw. Polymers (Reaktionskomponente bzw. Reaktionsschritt (b)) abhängig und beträgt etwa 0.3 mäq/g. Bevorzugt als Minimalkonzentration für die Reaktivgruppierungen ist mindestens 1.0 mäq/g (Gesamtbereich 0.3 bis 3.5, insbesondere 1.0 bis 2.5 mäq/g).

Wenn Polysulfone mit Hydroxylendgruppen (z.B. solche mit wiederkehrenden Einheiten der Formeln 10, 14) verwendet werden, kann bereits eine Minimalkonzentration von 0.05 mäq/g der HO-Endgruppen für eine Modifikation ausreichend sein (insbesondere von Bedeutung bei Polysulfonen mit niedrigem Molekulargewicht), (Gesamtbereich 0.05-3.5, vorzugsweise 0.1- 2.5 mäq/g).

Die Membranherstellung kann nach verschiedenen literaturbekannten Giessverfahren erfolgen (z.B. US-A-4 029 582, US-A-3 556 305, US-A-3615 024, US-A-3 567 810, GB-A-2 000 720). Das Polymer oder das modifizierte Polymer können in einem geeigneten Lösungsmittel oder in einem Lösungsmittelgemisch gelöst werden (z.B. N-Methylpyrrolidon-(NMP), Dimethylsulfoxid, Dimethylformamid, Hexamethylphosphoramid, N,N-Dimethylacetamid, Dioxan). Diese Lösung kann weitere Lösungsmittel (Co-Solventien), Teillösungsmittel, Nicht-Lösungsmittel, Salze, Tenside oder Elektrolyte für die Modifikation der Membranstruktur und der Beeinflussung ihrer Rückfluss- und Rückhalteeigenschaften enthalten (z.B. Aceton, Methanol, Ethanol, Formamid, Wasser, Methylethylketon, Triethylphosphat, Schwefelsäure, Salzsäure, Fettsäurepartialester von Zuckeralkoholen bzw. deren Ethylenoxidaddukte, Natriumdodecylsulfat (SDS), Natriumdodecylbenzolsulfonat, Natriumhydroxid, Kaliumchlorid, Zinkchlorid, Calciumchlorid, Lithiumnitrat, Lithiumchlorid, oder Magnesiumperchlorat). Die Giesslösung wird nach üblichen Methoden filtriert (z.B. durch Druckfiltration durch ein Mikroporfilter oder durch Zentrifugation) und dann auf ein Substrat wie z.B. Glas, Metall, Papier oder Kunststoff gegossen und von diesem Substrat dann wieder entfernt. Es ist jedoch vorteilhaft, die Giesslösung auf ein poröses Trägermaterial zu giessen, von der die Membran nicht entfernt werden muss Solche porösen Trägermaterialien können Non-wovens oder auch Gewebe sein, wie z.B. solche aus Cellulose, Polyethylen, Polypropylen, Nylon, Polyvinylchlorid und seinen Copolymeren, Polystyrol und Polyethylenterephthalat (Polyester), Polyvinylidenchlorid, Polytetrafluorethylen und Glasfasern. Die Membran kann auch in Form einer Hohlfaser oder eines Röhrchens gegossen werden. In diesem Fall ist ein Trägermaterial für den praktischen Gebrauch nicht notwendig.

Die Konzentration des Polymers in der Giesslösung ist abhängig von dessen Molekulargewicht und den

verschiedenen Zusätzen und kann zwischen etwa 5 und 80 Gew.% variieren. Vorzugsweise beträgt die Konzentration 10 bis 50 und insbesondere 15 bis 30%. Die Temperatur beim Herstellen der Membran kann zwischen -20 und +100°C variieren, bevorzugt ist jedoch der Bereich zwischen 0 und 60°C. Auch der Temperaturbereich hängt insbesondere vom Molekulargewicht des Polymers, sowie von den Cosolventien und Additiven in der Giesslösung ab.

Das Giessen der Polymerlösung auf ein Trägermaterial erfolgt nach üblichen und bekannten Methoden. Die Dicke des feuchten Polymerfilms kann zwischen 5 und 2000 (µm) schwanken. Bevorzugt ist jedoch ein Bereich zwischen 50 und 800 µm, wobei der Bereich zwischen 100 und 500 µm besonders bevorzugt ist. Der feuchte Polymerfilm und das Trägermaterial werden dann sofort oder nach einer Trocknungsphase (zwischen 5 Sekunden und 48 Stunden) bei Raumtemperatur oder leicht erhöhter Temperatur, gegebenenfalls auch unter Vakuum oder unter Anwendung einer Kombination dieser Massnahmen in ein sogenanntes Gelierungsbad eingetaucht. Dieses Gelierungsbad enthält ein Lösungsmittel, in dem das Polymer bzw. die daraus hergestellte Membran nicht löslich sind. Solche Gelierungsbäder enthalten normalerweise Wasser oder Wasser mit einem kleinen Anteil eines Lösungsmittels (z.B. DMF, NMP) und/oder Tenside (z.B. Natriumdodecylsulfat) bei Temperaturen von 0 bis 70°C. Ein Beispiel für ein üblicherweise verwendetes Gelierungsbad ist Wasser von 4°C mit einem Gehalt von 0,5% SDS. Enthält die polymere Giesslösung Komponenten, die durch Wasser oder ein anderes Lösungsmittel ausgewischen (ausgelaugt) werden können, so wird diese Giesslösung vergossen und getrocknet, ehe man die gebildeten Membranen dann in das Gelierungsbad gibt. Nach dem Eintauchen in das Gelierungsbad werden die auswaschbaren Komponenten wntfernt und man erhält eine poröse Membran.

In einer dritten Variation wird eine Polymerlösung verwendet, die keine auswaschbaren Komponenten enthält. Diese wird wie üblich vergossen und dann getrocknet. Die Bildung der Poren der Membran hängt in diesem Fall von der Kombination der physikalisch-chemischen Eigenschaften des Polymermaterials und des Lösungsmittels ab oder aber die Poren werden erst durch nachfolgende chemische Reaktion gebildet. Die beschriebenen Herstellungsverfahren sind für die Herstellung von Membranen geeignet, die erfindungsgemäss weiter modifiziert werden können. Diese chemische Modifikation der Membranen kann nach verschiedenen Verfahren durchgeführt werden, vorzugsweise werden jedoch die nach folgenden Reaktionsschritte eingehalten, wodurch eine Polymerschicht an die Trägermembran gebunden wird und diese Trägermembran mit der Polymerschicht vernetzt wird:

(a) zuerst erfolgt die Reaktion einer polyfunktionellen (monomeren) Verbindung mit den funktionellen Gruppen (z.B. Halogenatomen oder Amino- oder Hydroxylgruppen) der polymeren Membran, die als Substituenten der Polymerkette oder als integraler Bestandteil dieser Polymerkette vorhanden sein können. Nicht alle reaktiven Gruppen dieser polyfunktionellen Verbindung werden an der Vernetzung des Polymers teilnehmen, sondern es wird ein Teil verfügbar bleiben, um das hydrophile Oligomer oder Polymer an die Membran zu binden (Stufe (b)). Handelt es sich bei den funktionellen Gruppen, die in der Membran vorhanden sind, um z.B. Halogenalkyl- oder Aldehydgruppierungen, so kann als polyfunktionelle Verbindung das zuvor genannte hydrophile Oligomer oder Polymer verwendet werden und so der Reaktionsschritt (a) ausgelassen werden. Reaktive Gruppen der polyfunktionellen Verbindung, die in Stufe (a) nicht reagiert haben, werden verwendet, um ein hydrophiles Oligomer oder Polymer an die gemäss (a) gebildete Membran zu binden.

Dieses so gebundene Oligomer oder Polymer bildet einen dünnen Film aus, der zusätzliche reaktive Gruppen für die weitere Reaktion mit der Komponente (c) enthält, z.B. mit nichtionischen Verbindungen, die das Oligomer oder Polymer vernetzen und/oder ionischen Verbindungen, die ebenfalls eine Vernetzung bewirken, zusätzlich aber noch ionische Gruppen einführen. Die funktionellen Gruppen können z.B. die gleichen sein, wie sie im nachfolgenden Schritt (c) verwendet werden.

(c) Ionische (anionische) oder hydrophile (nichtionische) polyfunktionelle Verbindungen werden mit den funktionellen Gruppen des Oligomers oder Polymers gemäss Reaktionsschritt (b) umgesetzt und vernetzen das Oligomer oder Polymer und/oder führen gleichzeitig ionische Gruppen ein.

Die erfindungsgemässen Membranen bestehen also im wesentlichen aus einer Basismembran (Polysulfon), an die, gegebenenfalls über ein Brückenglied, ein hydrophiles Oligomer oder Polymer oder ein Polyelektrolyt gebunden ist, wobei sich diese im wesentlichen auf der Oberfläche der Basismembran oder in deren Poren befindet.

Als Komponente (a) geeignete Verbindungen sind in der Regel monomere, ionische oder vorzugsweise nichtionische Verbindungen mit vernetzenden Eigenschaften, die sowohl mit der Polysulfonmembran (mit reaktiven Gruppen) als auch mit der Komponente (b) (Oligomer oder Polymer) eine chemische Bindung eingehen können. Ihre Reaktivität verdanken diese mindestens zwei funktionelle Gruppen aufweisenden Verbindungen additionsfähigen Mehrfachbindungen, Epoxidgruppen, Aziridingruppen, Aldehydgruppen, Imidatgruppen, Isocyanat- oder Isothiocyanatgruppen, ferner Hydroxylgruppen, Anhydridgruppen, Acylhalogenidgruppen, Kohlensäurehalogenidgruppen, sowie N-Methylolgruppen, oder als tertiäres Amin oder vorzugsweise einem als Anion abspaltbaren Substituenten, wobei diese Gruppierungen und Substituenten auch in Kombination vorkommen können. Als addierende Mehrfachbindungen enthalten sie beispielsweise die Gruppierungen

$-CO-C=C-$, $-CO-C\equiv C-$,

die gegebenenfalls weiter substituiert sind. Auch die Isocyanat- oder Isothiocyanatgruppe kann zu diesen Gruppen gezählt werden. Als abspaltbare Gruppen kann die Komponente (a) quaternäre Ammoniumgruppen, die als tert. Amine abgespaltet werden, wie z.B. die Trimethylammonium- oder Pyridiniumgruppe, oder auch die Sulfoniumgruppe aufweisen. Als bevorzugte reaktionsfähige Gruppe enthält die Komponente (a) jedoch Substituenten mit einem als Anion abspaltbaren Rest, vorzugsweise mit reaktiven Halogenatomen. Derartige als Anion abspaltbare Reste verdanken ihre Reaktivität zum Beispiel dem Einfluss elektrophiler Gruppen, wie der -CO- oder $-SO_2$-Gruppe in gesättigten, aliphatischen Resten. Sie verdanken ihre Reaktivität auch dem Einfluss eines quaternären Stickstoffatoms, wie in der Gruppe-

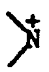

$-CH_2CH_2Cl$, oder in aromatischen Resten dem Einfluss von in o- und p-Stellung stehenden elektrophilen Gruppen, beispielsweise Nitro-, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin- oder Halogenpyrimidinresten.

Als besonders vorteilhaft haben sich als Komponente (a) cyclische Kohlensäureimidhalogenide und vor allem mindestens zwei reaktive Substituenten enthaltende Halogendi- oder -triazinverbindungen erwiesen. Tetrachlorpyrimidin und vor allem Cyanurchlorid sind dabei besonders vorteilhaft.

Bei den hier als Komponente (a) verwendeten, cyclischen Kohlensäureimid-dihalogeniden handelt es sich vorteilhafterweise um

(A) s-Triazinverbindungen mit mindestens zwei an Kohlenstoffatome gebundenen gleiche oder verschiedene Halogenatome, wie z.B. Cyanurchlorid, Cyanurfluorid, Cyanurbromid sowie um primäre Kondensationprodukte aus Cyanurfluorid bzw. Cyanurchlorid bzw. Cyanurbromid mit z.B. Wasser, Ammoniak, Aminen, Alkanolen, Alkylmercaptanen, Phenolen oder Thiophenolen; ferner Phenolen, Anilinen, Alkanolen oder Alkylaminen, die ionische Gruppen enthalten und die dihalogenierten Triazinverbindungen wasserlöslich machen. Solche ionischen Gruppen sind z.B. Sulfonsäure-, Carboxyl-, quaternäre Ammonium- und Sulfonium- oder Phosphoniumgruppen;

(B) Pyrimidine mit mindestens zwei reaktionfähigen gleichen oder verschiedenen Halogenatomen, wie 2,4,6-Trichlor-, 2,4,6-Trifluor-oder 2,4,6-Tribrompyridin, die in 5-Stellung beispielsweise durch eine Alkyl-, Alkenyl-, Phenyl-, Carboxyl-, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, wie z.B. Chlor, Brom oder Fluor, weitersubstituiert sein können. Besonders geeignete Halogenpyrimidine sind 2,4,6-Tri-chlor- und 2,4,5,6-Tetrachlorpyrimidin; ferner auch wasserlösliche Derivate der Pyrimidine und ähnlichen ionischen Gruppen wie unter (A) genannt;

(C) Halogenpyrimidincarbonsäurehalogenide, wie z.B. Dichlorpyrimidin-5- oder -6-carbonsäurechlorid;

(D) 2,3-Dihalogen-chinoxalin, -chinazolin- oder -phthalazin-carbonsäure- oder -sulfonsäurehalogenide, wie 2,3-Dichlorchinoxalin-6-carbonsäurechlorid bzw. -6-sulfonsäurechlorid, 2,6-Dichlorchina-zolin-6- oder -7-carbonsäurechlorid, 1,4-Dichlorphthalazin-6-carbonsäurechlorid oder -bromid;

(E) 2-Halogen-benzo-thiazol- bzw. -oxazolcarbonsäure- oder sulfonsäure-halogenide, wie 2-Chlorbenzothiazol- bzw. -oxazol-5- oder -6-carbonsäurechlorid bzw. -5- oder -6-sulfonsäurechlorid;

(F) Halogen-6-pyraidazonyl-1-alkanoylhalogenide oder l-benzoylhalogenide, wie z.B. 4,5-Dichlor-6-pyridazonyl-l-propionylchlorid bzw. -l-benzoylchlorid.

Weitere mindestens zwei reaktive Substituenten aufweisende Verbindungen, die als Komponente (a) eingesetzt werden können, sind beispielsweise

(G) Anhydride oder Halogenide aliphatischer, α,β-ungesättigter Monooder Dicarbonsäuren mit vorzugsweise 3 bis 5 Kohlenstoffatomen, wie Maleinsäureanhydrid, Acrylsäurechlorid, Methacylsäurechlorid und Propionsäurechlorid;

(H) Anhydride oder Halogenide von reaktive Halogenatome enthaltenden aliphatischen Mono- oder Dicarbonsäuren mit vorzugsweise 3 bis 10 Kohlenstoffatomen oder aromatischen Carbonsäuren, wie z.B. Chloracetylchlorid, β-Chlorpropionsäurechlorid, α,β-Dibrompropionsäurechlorid, α-Chlor- oder β-Chloracrylsäurechlorid, Chlormaleinsäureanhydrid, β-Chlorcrotonsäurechlorid bzw. Fluor-nitro- oder Chlornitrobenzoesäurehalogenide oder -sulfonsäurehalogenide, in welchen das Fluor- bzw. das Chloratom in o- und/oder p-Stellung zu der Nitritgruppe steht;

(I) Carbonsäure-N-Methylolamide oder reaktionsfähige, funktionelle Derivate dieser Methylolverbindungen. Als Carbonsäure-N-methylolamide kommen vor allem N-Methylolchloracetamid, N-Methylol-bromacetamid, N-Methylol-α,β-dichlor- oder dibrompropionamid, N-Methylol-acrylamid, N-methylol-α-chlor- oder -α-

bromacrylamid in Betracht. Als reaktionsfähige Derivate der Carbonsäure-N-methylolamide kommen beispielsweise die entsprechenden N-Chlormethyl- oder N-Brommethylamide in Frage;

(J) gegebenenfalls verätherte N-Methylolharnstoffe oder N-Methylolmelamine, wie z.B. N,N-Dimethylolharnstoff, N.N-Dimethylolharnstoff-dimethyläther, N,N'-Dimethyloläthylen- oder -propylenharnstoff, 4,5-Dihydroxy-N,N'-di-methyloläthylenharnstoff oder -dimethyläther bzw. Di- bis -hexamethylolmelamine, Trimethylolmelamindimethyläther, Pentamethylolmelamin-di-bis -trimethyläther, Hexamethylolmelamin-penta- oder hexamethyläther;

(K) Kondensationsprodukte von mindestens eine phenolische Hydroxylgruppe aufweisenden Diarylalkanen mit Halogenhydrinen, z.B. das Diepoxid aus 2,2-Bis(4'-hydroxyphenyl)-propan und Epichlorhydrin, sowie auch Glycerin-triglycidäther und ferner entsprechende Diaziridine;

(L) Di-aldehyde, wie z.B. Glutar- oder Adipinaldehyd;

(M) Diisocyanate oder Diisothiocyanate, wie z.B. Alkylen ($C_2$-$C_4$)-Diiso-cyanate, insbesondere Aethylendiisocyanat, Phenylen- oder Alkyl($C_2$-C)-substituierte Phenylendiisocyanate, wie z.B. Phenylen-1 4-Diisocyanat oder Toluol-2,4-diisocyanat, ferner Phenylendiisothiocyanate, wie z.B. Phenylen-1,4-diisothiocyanat;

(N) Weitere reaktive Verbindungen, wie Trisacrylol-hexahydro-s-triazin, Epoxide oder Aziridine.

Die Umsetzung einer Polysulfonmembran (mit z.B. Hydroxyl- oder Aminogruppen als Substituenten) gemäss (a) mit einer polyfunktionellen Verbindung wird z.B., wenn Cyanurchlorid verwendet wird, so durchgeführt, dass man eine wässrige Lösung (wässrig-organische Lösung-Wasser/Aceton) (Suspension) von Cyanurchlorid auf die Membran einwirken lässt. Die Menge Cyanurchlorid kann etwa 0,5 bis 5 Teile pro Teil Membran betragen. Die Reaktionstemperatur wird in der Regel unter 4°C, z.B. bei 0°C, gehalten, um die Hydrolyse des Cyanurchlorids zu vermeiden. Die Reaktionszeit beträgt etwa 20 Minuten bis 5 Stunden und der pH-Wertbereich umfasst etwa 8 bis 11.

Enthält die Polysulfonmembran Nitrilgruppen, so werden diese zunächst durch Umsetzung mit Hydroxylamin in Amidoximgruppen umgewandelt. Die Reaktion wird z.B. unter Einhaltung der folgenden Parameter durchgeführt: Behandlung der Membran während 2 bis 60 Minuten bei Temperaturen von etwa 55 bis 75°C und einer wässrigen Hydroxylaminlösung (2 bis 15%), deren pH-Wert 2 bis 11, vorzugsweise 6 bis 7 (eingestellt z.B. mit Natriumcarbonat) beträgt.

Die so behandelte Membran wird dann aus der Reaktionslösung entfernt und in wässriger Lösung (Suspension) mit der polyfunktionellen Verbindung (z.B. Cyanurchlorid), wie oben beschrieben, weiter modifiziert. Eine andere Umwandlung der Nitrilgruppen besteht darin, dass man sie zu Aminogruppen reduziert, die dann wie oben angegeben weiter modifiziert werden können. Die Umsetzung mit den Komponenten (b) und (c) sowie auch die Modifizierung von Polysulfonen, die reaktive Halogenalkyl- oder Aldehydgruppen enthalten, wird nachfolgend beschrieben.

Die weitere Umsetzung der gemäss (a) modifizierten Membran mit einem hydrophilen Oligomer oder Polymer hängt wesentlich von den beteiligten reaktiven Gruppen ab. Enthält die Polysulfonbasismembran z.B. Halogenmethyl(Chlormethyl)gruppen, so ist der Reaktionsschritt (a) nicht nötig, da man die chemische Bindung mit dem Oligomer oder Polymer (mit z.B. Hydroxyl-oder Aminogruppen) durch nukleophilen Austausch des Halogenatoms knüpfen kann. Neben der Herstellung dieser chemischen Bindung erfolgt gleichzeitig auch eine Vernetzung. Die Reaktion kann in verschiedenen Lösungsmitteln oder Lösungsmittelgemischen durchgeführt werden und wird durch verschiedene Katalysatoren beschleunigt.

So kann man z.B. eine Membran aus chlormethyliertem Polysulfon mit einer wässrigen Lösung von Polyäthylenimin (MG 30000) in Gegenwart von 1% Kaliumjodid bei 50°C während 5 Minuten umsetzen und erhält so eine vernetzte Membran mit einer Polyäthyleniminschicht, an der weitere chemische Reaktionen (Modifikationen) vorgenommen werden können. Polysulfonmembranen mit Aldehydfunktionen können analog modifiziert werden.

Polysulfonmembranen mit z.B. Hydroxyl-, Amino- oder Amidofunktionen (als Substituenten in Alkyl- oder Arylresten oder als Teile der Polymerkette) werden in der Regel erst mit der polyfunktionellen Komponente (a) und dann erst mit dem hydrophilen Oligomer oder Polymer (b) (das z.B. Hydroxyl- oder Aminogruppen enthält) umgesetzt.

Bei der Komponente (b) (polyfunktionelles Oligomer oder Polymer) handelt es sich um Verbindungen, welche aliphatische oder aromatische Aminogtuppen enthalten, wobei diese primär, sekundär oder tertiär sein können; ferner kann diese Komponente Hydroxy- oder Thiogruppen aufweisen. Beispiele solcher Polymerer sind Polyäthylenimin (M.G. 150 bis 1'000 000), teilweise alkyliert (z.B. mit Methyljodid) oder andersweitig modifiziert, Polyvinylalkohol (M.G. 2000 bis 2'000 000) oder teilweise veresterter Polyvinylalkohol, Cellulosederivate, wie Aethylcellulose, Carboxymethylcellulose, Hydroxymethylcellulose, Hydroxyäthylcellulose, ferner Polyvinylanilin (M.G. 200 bis 2 000 000), Polybenzylamin, Polyvinylamin (M.G. 1000 bis 2 000 000), Polyvinylmerkaptan, Polyvinylimidazolin, Kondensationsprodukte aus Dicyandiamid, Aminsalzen (Ammoniumchlorid) und Formaldehyd (US-A-3 290 310), aminomodifizierte Polyepihalogenhydride (GB-A 1 558 807), Polydiallylaminderivate und Piperidinringe enthaltende Polymere (GB-A-2 027 614)/ Aminopolysulfone, Aminopolyarylenoxide (aminomethyliertes Polyphenylenoxid) und Polymere mit hydrophilen Aninogruppen (EP-A-8945), Polymere aus 2-Hydroxyäthyl- oder 2-Aminoäthylmetacrylat, Co-, Block- oder Pfropfpolymere aus diesen Monomeren und/oder Polymeren sowie weiteren insbesondere ionischen Gruppen ($SO_3^{\ominus}$, $-COO^{\ominus}$, $-N^{\oplus}R_4$) enthaltenden Monomeren und/oder Polymeren. Beispiele hierfür sind die Copolymeren aus Styrolsulfonat (Natriumsalz)/Vinylanilin, 2-Aminoäthylmethacrylat/Acrylsäure,

Vinylanilin/Vinylbenzyltrimethylammoniumchlorid oder Vinylamin/Vinylsulfonat.

Bevorzugte Komponenten (b) sind Polyvinylalkohole, Cellulosederivate, Polyvinylamine oder Polyvinylaniline und insbesondere die polyaliphatischen (acyclischen oder cyclischen) Polyalkylenimine (Polyäthylenimine) sowie auch die zuvor beispielhaft genannten Copolyneren.

Die Molgewichte der Polyäthylenimine (PEI) können wie angegeben im Bereich von 150 bis 2 000 000 liegen. Vorzugsweise beträgt ihr Molekulargewicht 1000 bis 200 000 und insbesondere 10 000 bis 70 000.

Die oligomeren oder polymeren Polyäthylenimine mit niederen Molekulargewichten (150 bis 1000) können verwendet werden, allerdings werden die Rückhalteeigenschaften der erhaltenen Membranen nicht so gut verbessert wie bei der Verwendung von Polyäthyleniminen mit höheren Molekulargewichten.

Der Grad der Vernetzung kann ebenfalls durch das Molekulargewicht beeinflusst werden. Beispielsweise vernetzt ein PEI vom Molekulargewicht 30 000 eine Membran aus einem chlormethylierten Polysulfon (1,6 mäq/g) in 3 Minuten bei Raumtemperatur, während ein PEI mit dem Molekulargewicht 189 unter den gleichen Bedingungen keine Vernetzung bewirkt und die Membran noch löslich in NMP ist.

Bevorzugt sind auch die genannten Kondensationsprodukte auf Basis von Dicyandiamid.

Für die Reaktion der zuvor genannten Oligomeren oder Polymeren mit der Membran ist Wasser das bevorzugte Lösungsmittel, obwohl andere Lösungsmittel, wie z.B. niedere Alkohole oder Ketone allein oder in Kombination mit Wasser verwendet werden können. Die Polymerkonzentration (in den Lösungen) kann zwischen 0,1 und 100% betragen, vorzugsweise beträgt sie jedoch 1 bis 30% und insbesondere 5 bis 15%. Die einzusetzende Polymerkonzentration, die notwenig ist, um ein Optimum an Durchfluss- und Rückhaltevermögen der Membran zu erreichen, ist abhängig von den reaktiven Gruppen, der Temperatur, der Reaktionszeit sowie dem pH-Wert. Diese Faktoren sowie auch das nach der Reaktion erfolgende Auswaschen kontrollieren das Ausmass der Bindung des Polymers an die Membran sowie auch die Dicke der Polymerschicht. Die Temperatur der Polymerlösung während der Reaktion mit der Membran liegt in der Regel zwischen 0 und 90°C. Die optimale Temperatur ist eine Funktion der Reaktionsgenetik der Reaktionsteilnehmer. So erfordert z.B. die Reaktion eines chlormethylierten Polysulfons mit PEI bei einer Temperatur von 30° 5 Minuten, während andererseits die Reaktion zwischen Clortriazinylgruppen und PEI wahrend 30 Minuten bei 25°C ausgeführt werden kann.

Die Reaktionszeit kann zwischen einer Sekunde und 48 Stunden, vorzugsweise 30 Sekunden und 5 Minuten, variieren und ist abhängig von der Temperatur, dem pH-Wert der Lösung sowie der Konzentration der Reaktionspartner. Um z.B. eine Membran mit gutem Durchfluss- und gutem Rückhaltevermögen zu erreichen, sollte man eine chlormethylierte Polysulfonmembran (2,0 mäq/g) bei 50°C und einem pH-Wert von 8,5 während 2 bis 12 Minuten in einer 10%igen Lösung von PEI (MG 30 000) behandeln. Längere Behandlungszeiten (Reaktionszeiten) verbessern das Durchflussund Rückhaltevermögen nicht. Andererseits benötigt man für die gleiche Reaktion nur etwa 5 bis 30 Minuten bei 20°C, wenn man eine Membran aus einem Aminogruppen enthaltenden Polysulfon, die zuvor mit Cyanurchlorid umgesetzt worden ist, einsetzt. Man erhält auch in diesem Fall eine Membran mit guten Rückhalteeigengschaften.

Das Molekulargewicht von PEI spielt eine wesentliche Rolle für die Durchfluss- und Rückhalteeigenschaften der Membran. Wenn die Ausgangsmembran (die erfindungsgemäss modifiziert wird) einen relativ geringen Rückhalt (weniger als 90%) aufweist, sollte man PEI mit Molekulargewichten von etwa 10 000 bis 1 000 000 einsetzen, um einen Rückhalt von mindestens 98% zu erreichen, der Flux nimmt dabei allerdings ab.

Andererseits kann man bei Ausgangsmembranen, die bereits einen hohen Rückhalt (mehr als 90%) aufweisen, mit PEI mit kleineren Molekulargewichten (z.B. 600 bis 9000) Membranen mit hohem Rückhalt (grösser als 99%) bei gleichzeitig gutem Flux erhalten.

Der pH-Wert der Polymerlösung dient dazu, die Löslichkeit des Polymers. die Reaktionsgeschwindigkeit zwischen Polymer und Substrat und die Menge Polymer, die an der Oberfläche absorbiert wird, zu kontrollieren. Es wurde gefunden, dass bei pH-Werten über 7, insbesondere bei pH-Werten von 7 bis 10, die Reaktionsgeschwindigkeit ihre optimalen Werte erreicht, obwohl auch bei höheren oder tieferen pH-Werten gearbeitet werden kann. Wenn pH-Werte im sauren Bereich angewendet werden, um die Löslichkeit der Oligomeren oder Polymeren zu erhöhen, benötigt nan zunächst eine gewisse Zeit für die Adsorption des Polymers an die Membran und muss dann den pH-Wert über 7 erhöhen, um die chemische Bindung zu erhalten. pH-Werte über 12 sind nicht geeignet, da sie die Hydrolyse der funktionellen Gruppen an der Membran beschleunigen können.

Nach der Reaktion der Oligomeren oder Polymeren mit der Membran wird diese in Wasser gewaschen, um überschüssiges Oligomer oder Polymer zu entfernen. Die Zeit zum Waschen der Membran kann zwischen einer Minute und 48 Stunden variieren, bevorzugt sind jedoch 30 Minuten bis 4 Stunden. Uebermässiges Waschen oder Spülen der Membran führt zu einem Verlust an Rückhaltevermögen, dieses ist jedoch immer noch höher als bei einer nichtmodifizierten Membran. Ein zu kurzes Waschen der Membran führt in der Regel zu relativ dicken Polymerschichten auf der Membran und damit zu Membranen mit relativ geringem Durchfluss. Der pH-Wert und die Temperatur der Waschlösung liegen etwa zwischen 1 und 10 bzw. 0 und 70°C. Bei höheren Temperaturen und niederen pH-Werten (l bis 3) kann man auch mit kürzeren Zeiten für das Waschen und Spülen der Membran auskommen.

Zur Erleichterung der Entfernung von überschüssigem Oligomer oder Polymer und zur Verkürzung der Wasch- und Spülzeiten kann die Waschlösung z.B. Tenside (z.B. anionische oder nichtionische Tenside; Natriumdiamylsulfat, Dodecylbenzolsulfonsäure, Tweens etc.), Salze, wie z.B. Natriumcarbonat, Natriumhydrogencarbonat, Natriumsulfat, Magnesiumsulfat und andere sowie auch nicht-reaktive Farbstoffe,

z.B. Kongorot, enthalten.

Von den zuvor aufgezählten Komponenten (a) und (b) wird nicht erwartet, dass jede Komponente (b) gleich gut mit jeder Komponente (a) reagieren wird (kann). Komponenten (b), die z.B. Alkylamingruppen enthalten, sind in der Regel reaktiver als solche Komponenten, die aromatische Aminogruppen oder Hydroxygruppen enthalten.

Ebenfalls werden oligomere oder polymere Isocyanate oder Isothiocyanate (b) in der Regel nicht mit einer Komponente (a) mit identischen Reaktivgruppierungen reagieren. In diesem Fall wird man aus den Komponenten (a) natürlich solche aussuchen, die mit der Komponente (b) reagieren, also z.B. Komponenten mit Methylol-, Amino- oder Hydroxylgruppen, die gut mit den Isocyanaten (b) reagieren können.

Der gemäss (b) auf die Membran aufgebrachte Oligomer- oder Polymerfilm wird vernetzt und/oder mit ionischen Gruppen versehen durch Umsetzung mit einer polyfunktionellen Verbindung (c).

Als ionisierbare Gruppen in der Komponente (c) oder in der Membran nach der Modifizierung sind Sulfatogruppen, Sulfonsäuregruppen, Carbonsäuregruppen, von primären, sekundären oder tetriären Aminogruppen und Wasserstoff gebildete Ammmoniumgruppen oder quaternäre Ammonium-, Phosphonium- oder Sulfoniumgruppen geeignet. Besonders günstige Ergebnisse werden mit sulfonsäuregruppenhaltigen Komponenten erzielt.

Beim Vorliegen einer monomolekularen Schicht erübrigt sich die Vernetzung und die Reaktion mit (c) dient ausschliesslich der Einführung ionischer Gruppen in die Membran.

Bevorzugt ist die Verwendung von ionischen polyfunktionellen Verbindungen, die in der Regel zu Membranen mit gutem Durchfluss und gutem Rückhaltevermögen führen.

Andererseits kann man die polyfunktionellen Verbindungen auch nur zur Vernetzung von (b) einsetzen.

Der Vernetzungs- und (Beladungsschritt) mit ionischen Gruppen kann vorzugsweise in wässrigem Medium ausgeführt werden und unterscheidet sich daher von den üblichen Vernetzungen bei Kompositmembranen.

Bevorzugte polyfunktionelle Verbindungen sind ionische Triazinyl- oder Pyrimidylderivate, wie z.B. reaktive Azofarbstoffe mit diesen Resten als Reaktivgruppierung sowie mit Sulfo-($SO_3^{\ominus}$), Carboxyl-($COO^{\ominus}$- und/oder Ammoniumgruppen. Farblose Verbindungen mit den gleichen Reaktivgruppierungen sind ebenfalls geeignet.

Die Vernetzung kann durch Bildung von chemischen Bindungen, elektrostatischen Wechselwirkungen zwischen ionischen Gruppen oder durch Komplexierung polymerer Funktionen mit Metallionen erfolgen. Alle drei Möglichkeiten der Vernetzung können nebeneinander vorliegen und sie kann daher z.B. durch Verwendung einer einzigen Verbindung (wie den Farbstoff der Formel (101)), oder durch stufenweisen oder gleichzeitigen Einsatz von 2 oder 3 verschiedenen Komponenten (Farbstoffen, Metallsalzen) erreicht werden. Geeignete Salze mehrwertiger Metalle sind z.B. Kupfer(II)sulfat, Chrom(III)chlorid oder Eisen(III)chlorid. Diese Salze können allein oder in Kombination mit anderen Vernetzungsmitteln (die kovalente Bindungen ausbilden können) eingesetzt werden. Bevorzugt ist die Vernetzung unter Bildung chemischer Bindungen. Hydrophile polyfunktionelle (nichtionische und farblose) Verbindungen, sind z.B. Diepoxide, Aziridine, Anhydride und vorzugsweise cyclische Kohlensäureimidhalogenide (Cyanurchlorid, Tetrachlorpyrimidin), Dihalogenide von Dicarbonsäuren oder Dialdehyde, ferner auch Trihalogenide von Tricarbonsäuren. Die Säurehalogenide werden aus aprotischen Lösungsmitteln appliziert, während die übrigen polyfunktionellen Verbindungen aus wässrigem Medium unter Einhaltung bestimmter pH-Wert- und Temperaturbereich appliziert werden können.

Die reaktiven Farbstoffe können verschiedenen Klassen angehören und sind z.B. Anthrachinon-, Formacyl- oder Azofarbstoffe. Azofarbstoffe sind bevorzugt. Sie können gegebenenfalls auch als Metallkomplexe vorliegen.

Als Reaktivgruppen (z.B. in den Farbstoffen (c)) seien die folgenden genannt: Carbonsäurehalogenidgruppen, Sulfonsäurehalogenidgruppen, Reste von α,β-ungesättigten Carbonsäuren oder Amiden, z.B. der Acryl-, Methacryl-, α-Chloracryl- oder α-Bromacrylsäure, Acrylamidreste, Reste vorzugsweise niedriger Halogenalkylcarbonsäuren, z.B. der Chloressigsäure, α,β-Dichlorpropionsäure oder α,β-Dibrompropionsäure; Reste von Fluorcyclobutancarbonsäuren, z.B. der Tri- oder Tetrafluorcyclobutancarbonsäure; Reste mit Vinylacylgruppen, z.B. Vinylsulfongruppen oder Carboxyvinylgruppen; Reste, die Aethylsulfonyl ($-SO_2CH_2CH_2OSO_2OH$, $-SO_2CH_2CH_2Cl$)oder Aethylaminosulfonylgruppen($-SO_2NHCH_2CH_2OSO_2OH$) enthalten und halogenierte heterocyclische Reste, wie z.B. Reste von Dihalogenchinoxalinen, Dihalogenpyridazonen, Dihalogenphthalazinen, Halogenbenzthiazolen oder vorzugsweise halogenierten Pyrimidenen oder 1,3,5-Triazinen, wie z.B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Beispielhaft seien die folgenden reaktiven Gruppen, die sich in der Komponente (c) befinden können, aufgezählt: Monochlortriazinyl, Dichlortriazinyl, 2,4-Dichlorpyrimidyl, 2,3-Dichlorchinoaxalin-6-carbonyl, 4,5-Dichlorpyridazonpropionyl, 1,4-Dichlorphthalazin-6-carbonyl, Chlorbenzthiazol, das mit einem Farbstoffmolekül über $-CONH-$,$-SO_2NH-$, $-NH-Ar-N=N-$ (Ar = Phenylen oder Naphthylen), verbunden ist, 5-Chlor-4-methyl-2-methylsulfonyl-pyrimidyl, Vinylsulfonyl, β-Sulfatoäthylsulfonyl, β-Sulfatoäthylaminosulfonyl, β-Chloräthylsulfonyl oder β-Sulfatopropionamido.

Besonders bevorzugt als Komponente (c) sind reaktive Azofarbstoffe, die Sulfonsäuregruppen ($-SO_3H$) oder Carboxylgruppen ($-COOH$) enthalten, wobei diese auch in Salzform, z.B. in Form eines Alkalimetallsalzes (Natriumsalz) vorliegen können, und die als Reaktivgruppierungen Monochlortriazin-, Dichlortriazin-, 2,4-Dichlorpyrimidin-, Vinylsulfonyl-, β-Sulfatoäthylsulfonyl-, β-Chloräthylsulfonyl- oder β-Sulfatoäthylaminosulfonylreste enthalten.

Besonders wertvoll und vielseitig sind die Membranen, in denen die Komponente (b) mit einem sulfonsäuregruppenhaltigen Azofarbstoff modifiziert ist. Der Azofarbstoff kann auch komplexgebundenes Metall, z.B. Kupfer, enthalten.

Die Umsetzung mit der Komponente (c) dient wie angegeben zur Vernetzung der Membran und gegebenenfalls der Einführung von positiven oder negativen Ladungen (ionischen Gruppierungen) in die Membranoberfläche und/oder die Poren und erfolgt ein- oder zweistufig.

Einstufig bedeutet, dass die die Ladungen tragende Verbindung und sogenannte Fixiermittel (z.B. Alkali) in einem Bad angewendet werden.

Im zweistufigen Verfahren hat man zunächst den Adsorptionsschritt der die Ladung tragenden Verbindung und dann in einer separaten Reaktionslösung den Fixierschritt (chemische Reaktion zwischen der Komponente (c) und der (modifizierten) Membran). Das zweistufige Verfahren ist bevorzugt, da einerseits die Konzentration der Komponente (c) in der Adsorptionslösung niedriger gehalten werden und eine solche Lösung gegebenenfalls mehrfach verwendet werden kann und andererseits die Gesamtreaktionszeit kürzer ist als im einstufigen Verfahren.

Im zweistufigen Verfahren kann die Konzentration eines Reaktivfarbstoffes (Komponente (c)) in wässriger Lösung etwa 0,5 bis 3% betragen; die Adsorption wird z.B. bei Temperaturen von 20 bis 35°C während 2 bis 60 Minuten durchgeführt; der pH-Wert kann 4 bis 8 betragen. Die Fixierung kann dann in einer wässrigen, auf einen pH-Wert von 9 bis 12 eingestellten Lösung durchgeführt werden, wobei die Reaktionszeit etwa 30 Minuten betragen kann. Die Einstellung des pH-Wertes erfolgt mit beliebigen anorganischen (Natriumcarbonat) oder organischen Basen.

Ferner ist es auch möglich, die geladenen Gruppen durch Umsatz von Reagenzien, wie Alkyl- oder Benzylhalogeniden, mit einer Aminofunktion der Polymerkette in die Membran einzuführen. Auf diese Weise kann z.B. der Polyäthyleniminrest mit Methyljodid oder Dimethylsulfat modifiziert werden. Andererseits kann auch direkt mit Chlorsulfonsäure modifiziert werden.

Die Membranen können, je nach Verwendungszweck verschiedene Formen aufweisen, z.B. plattenförmig, blattförmig, röhrenförmig, in Form einer Tasche, eines Sacks, eines Konus oder als Hohlfasern vorliegen. Bei starker Druckbelastung können die Membranen natürlich durch Non-woven-Träger, Träger aus textilen Geweben oder Papier, Drahtsiebe oder Lochplatten (Module) geschützt werden. Innerhalb des weiter oben angegebenen Bereiches kann die Porengrösse durch verschiedene Temperaturen variiert und ebenfalls dem jeweiligen Verwendungszweck angepasst werden. So kann man z.B. durch Tempern der Membranen vor oder nach ihrer chemischen Modifikation (50 bis 140°C) die Porengrösse und damit der Durchfluss und das Rückhaltevermögen der Membranen verändern.

Gegenüber bekannten modifizierten Membranen zeigen die erfindungsgemässen bzw. erfindungsgemäss hergestellten Membranen folgende Vorteile:

1. Verbessertes Rückhaltevermögen von geladenen, insbesondere mehrfach geladenen ionogenen Substanzen einer wässrigen Lösung.

2. Vergrösserung des Unterschiedes im Rückhaltevermögen von mehrfach geladenen und monovalenten Ionen in wässrigen Lösungen.

3. Verbesserung des Wirkungsgrades der Trennung (Konzentrierung) von geladenen, insbesondere mehrfach geladenen Ionen von Lösungsmittel (Wasser).

4. Verbesserung des Wirkungsgrades beim Trennen von mehrfach geladenen und einfach geladenen gelösten Stoffen.

5. Verbesserung des Wirkungsgrades bei der Trennung von niedermolekularen von hochmolekularen Stoffen, wobei sowohl die nieder- als auch die hochmolekularen Stoffe einwertig sind und die gleiche Ladung (positiv oder negativ) aufweisen.

6. Einsatzmöglichkeit bei pH-Werten von etwa 2 bis 12 und Temperaturen bis zu 70°C.

7. Verbesserung der Stabilität gegenüber Lösungsmittel, wobei die Membranen in den üblichen Lösungsmitteln, z.B. N,N-Dimethylformamid, nicht mehr löslich sind.

8. Verbesserter Widerstand gegen hohe Drücke (gute Stabilität). Druckbeieich etwa zwischen 2 und $100.10^5$ vorzugsweise 2 und $50.10^5$ und insbesondere 2 bis $30.10^5$ Pa.

Insbesondere die folgenden Anwendungen sind für die erfindungsgemässen Membranen vorteilhaft, wobei es sich im Prinzip stets um Trennungen einwertiger Ionen niedrigen Ionengewichts von mehrwertigen Ionen mit niedrigem oder höherem Ionengewicht und einwertigen Ionen mit höherem Ionengewicht, um Trennungen ionogener von nichtionogenen Substanzen oder von ionogenen Verbindungen unterschiedlichen Molekulargewichts oder entgegengesetzter Ladung handelt. Die Trennung erfolgt nach üblichen Methoden, z.B. indem man die zu trennende Flüssigkeit/Lösung auf einer Seite der Membran vorlegt und unter Anwendung eines hydraulischen Drucks, der grösser ist als der osmotische Druck der Lösungen, die Lösungen filtriert.

1. Die Trennung von organischen und auch metallorganischen ionogenen Substanzen von Nebenprodukten aus einer Reaktionsmischung und anderen Substanzen, welche darin enthalten sind, z.B. von Salzen, wie Natriumchlorid, Natriumsulfat oder Natriumacetat oder Säuren.

2. Die Trennung von Schwermetallkomplexen von solchen Salzen, welche keine Komplexe bilden (Behandlung von Abwässern).

3. Die Reinung und Abwässern, welche bei der Produktion und Anwendung von Farbstoffen und optischen Aufhellern anfallen.

4. Die Trennung von Proteinen oder Hormonen, welche ähnliche Molekulargewichte haben, jedoch entgegengesetzt geladen sind.

5. Die Trennung von ionischen Tensiden (Detergenzien, Netzmittel oder Dispergatoren) von anderen Chemikalien, welche in der Reaktionsmischung nach der Herstellung der Tenside noch vorhanden sind (Nebenprodukte, überschüssige Ausgangsprodukte).

6. Die Entfernung von ionogenen Tensiden aus Abwässern.

7. Die Trennung von ionogenen Molekülen von Wasser, d.h. die Konzentrierung von wässerigen Lösungen, welche Metallkomplexe, Tenside, Farbstoffe oder Proteine enthalten, wobei bessere Ergebnisse bezüglich des Wirkungsgrades (Durchfluss pro Zeiteinheit) und des Trenneffektes im Vergleich zu bekannten Membranen erzielt werden.

8. Die Trennung von entgegengesetzt geladenen Verbindungen.

9. Die Trennung von geladenen und ungeladenen Verbindungen.

Der Trenneffekt (das Rückhaltevermögen) der Membranen kann wie folgt gemessen werden: eine kreisförmige Membran von 13 $cm^2$ Fläche wird, auf einer Sinterscheibe aus rostfreiem Stahl ruhend, in eine zylindrische Zelle aus rostfreiem Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder geben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem ab Start des Experimentes 3 Muster von je 5 ml gezogen werden. Im allgemeinen ist die Durchflussmenge durch die Membran und die Zusammensetzung der 3 Muster konstant. Hieraus lässt sich das Rückhaltevermögen als

$$R = \frac{c_1 - c_2}{c_1} \cdot 100(\%)$$

berechnen. Als Durchflussmenge pro Flächen- und Zeiteinheit ergibt sich

$D = V.F^{-1}.t^{-1}$ V: Volumen

F: Membranfläche

t: Zeit

D ist zweckmässig ausgedrückt in $m^3.m^{-2}.d^{-1}$, d.h. Anzahl Kubikmeter je Quadratmeter Membranfläche und Tag oder in $lm^{-2}h^{-1}$, d.h. Liter pro Quadratmeter Membranfläche und Stunde.

Zusätzlich zu den Messungen an Flachmembranen werden auch Messungen mit röhrenförmigen Membranen von 60 cm Länge und einem äusseren Durchmesser von 1,4 cm durchgeführt. Diese röhrenförmigen Membranen werden dazu in eine perforierten Röhre aus rostfreiem Stahl gebracht.

Das Ganze wird in eine Röhre aus Polycarbonat gebracht. Der Ausfluss der Membrane befindet sich zwischen dieser äusseren Polycarbonatröhre undder Stahlröhre. Die Flüssigkeitszugabe erfolgt als turbulent oder laminar fliessender Stromder Lösung unter Druck. Die Fliessgeschwindigkeit wird konstant bei etwa 10-15 Litern pro Minute gehalten. Die Berechnung des Rückhaltevermögens und des Durchflusses erfolgt auf die gleiche Weise wie für die Flachmembranen.

In den folgenden Beispielen werden die Farbstoffe und farblosen Verbindungen der Formeln (101) bis (107) als polyfunktionelle Verbindungen zur Vernetzung der Komponente (b) und zur Einführung ionischer Gruppen verwendet. Die Farbstoffe der Formeln (108) bis (110) werden in Testlösungen verwendet.

Teile und Prozente in den nachfolgenden Beispielen beziehen sichsofern nicht anders angegeben - auf das Gewicht.

(101)

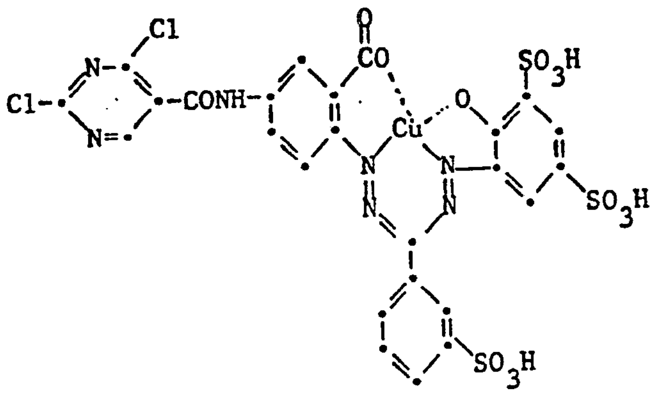

(102 a)

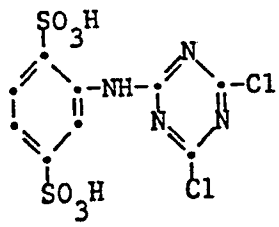

(102b)

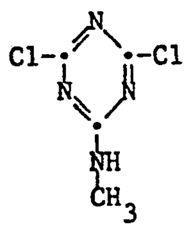

(102c)

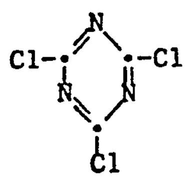

(102d)

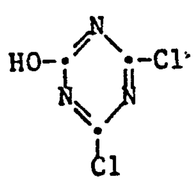

(103)

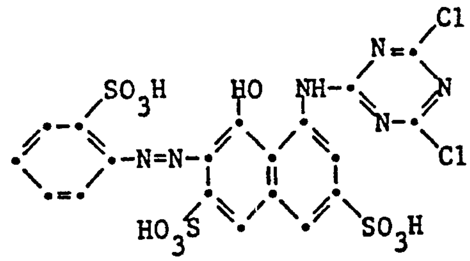

(104)

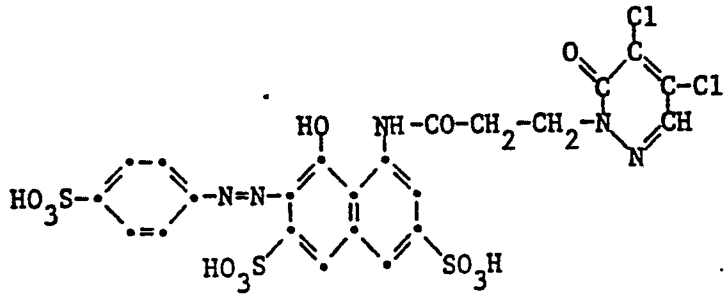

(105)

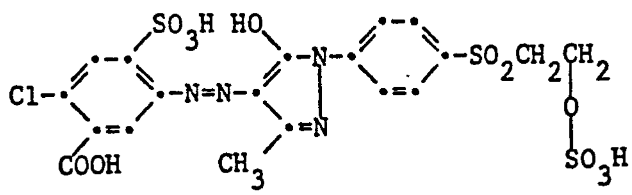

(106)

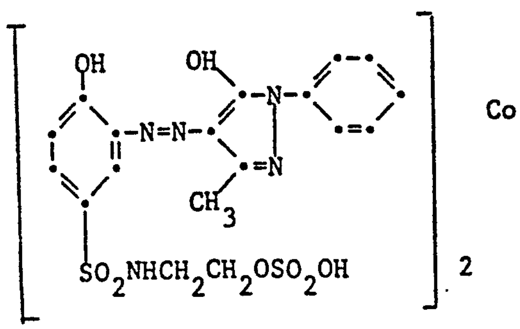

(107)

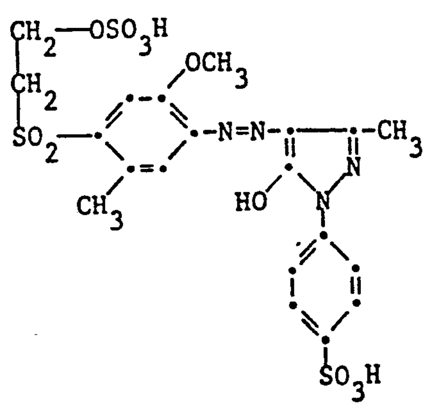

(108) 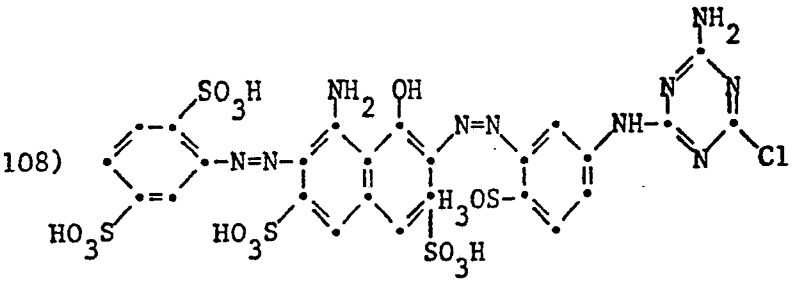

(109) Cu phthalocyanine-(3) 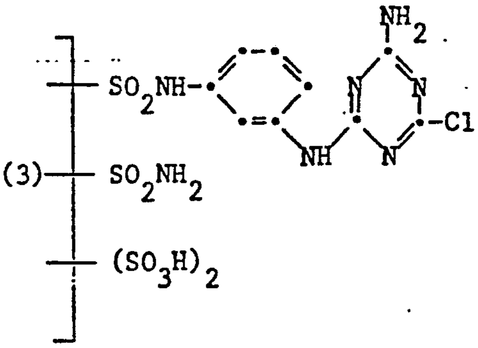

(110) 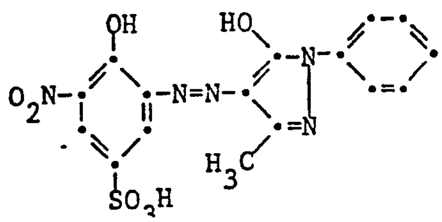

+

~ 1/3 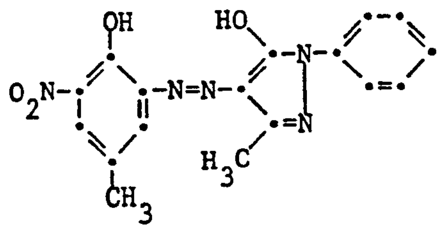

~ 2/3 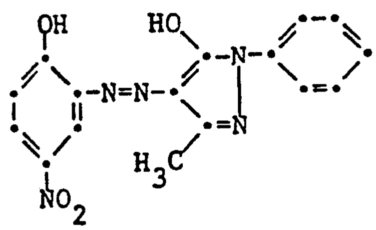

(1:2 Chromkomplex)

**Beispiel 1**

Ein Polysulfon mit wiederkehrenden Einheiten der Formel

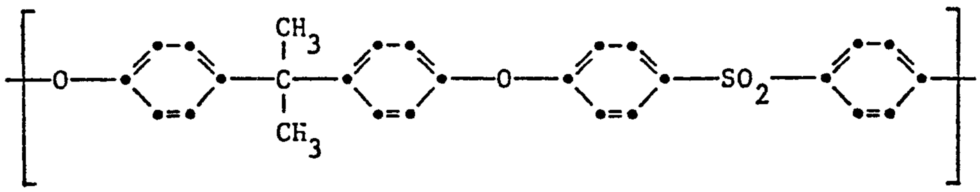

(Molekulargewicht 42 000)
wird wie folgt chlormethyliert: Zu einer Lösung von 5 g Polysulfon in 200 ml Methylenchlorid werden 5 ml Chlormethylmethyläther und 0,5 ml $SnCl_4$ gegeben; die Lösung wird zwei Stunden auf Rückflusstemperatur erhitzt. Nach dem Abkühlen giesst man die Lösung in 500 ml Methanol, um das Polymer auszufällen. Das Polymer wird abfiltriert und zur weiteren Reinigung in Dimethylformamid gelöst und in Wasser ausgefällt. Der Chlormethylgehalt beträgt 1,7 Milliäquivalente/g (mäq/g). Zu einem analogen Ergebnis gelangt man, wenn man die Chlormethylierung mit Paraformaldehyd, Chlorwasserstoff und Zinkchlorid durchführt (US-A-3 984 399).

Eine 18%ige Lösung des chlormethylierten Polysulfons in N-Methylpyrrolidon wird hergestellt, filtriert und dann als 0,2 mm dicke Schicht auf einen Polyester-Non-wovens-Träger gegossen und dann sofort in eine wässrige, 0,5%ige Natriumdodecylsulfonatlösung von 4° C getaucht.

Nach 24 Stunden entfernt man die Membran aus dieser Lösung und modifiziert sie in einem ersten Schritt in einer 10%igen wässrigen Lösung von Polyethylenimin (PEI) (M.W. 30 000-40 000) bei 30° C während 5 Minuten. Anschliessend wird die Membran 2 Stunden in Wasser gewaschen. Dann gibt man die Membran in eine wässrige Lösung, die 1% des Farbstoffs der Formel (101) und 10% Natriumchlorid enthält, behandelt sie 15 Minuten in dieser Lösung, nimmt sie dann heraus und taucht sie noch tropfnass (Abtropfzeit: 10 Sekunden) in eine 2%ige Natriumcarbonatlösung von Raumtemperatur, in der sie dann 30 Minuten verbleibt.

Die resultierende Membran ist vernetzt und daher unlöslich in N-Methylpyrrolidon- und Dimethylformamid. Eine Membran mit ähnlichen Eigenschaften wird erhalten, wenn man anstelle von Polyethylenimin ein Kondensationsprodukt aus Dicyandiamid, Ammoniumchlorid und Formaldehyd einsetzt (US-A-3 209 310).

In der folgenden Tabelle 1 sind Durchfluss und Rückhaltevermögen der Membran vor und nach der Modifikation angegeben.

Die Polysulfonmembran (nicht modifiziert, nicht chlormethyliert) ist in N-Methylpyrrolidon (NMP) löslich und zeigt gegenüber dem Farbstoff (der Farbstofflösung) der Formel (109) einen Durchfluss von 130 $l/m^2.h$ und ein Rückhaltevermögen von 76%.

**Tabelle 1**

| gelöste Verbindung | Konzentration % | Vor der Modifikation | | Nach der Modifikation | |
|---|---|---|---|---|---|
| | | Rückhaltevermögen % | Durchfluss $l/m^2 \cdot h$ | Rückhaltevermögen % | Durchfluss $l/m^2 \cdot h$ |
| Farbstoff der Formel (108) | 0,15 | 91 | 180 | 98,2 | 170 |
| Kongorot | 1,0 | 64 | 120 | 99,1 | 95 |
| p-Toluolsulfonsäure | 1,0 | 16 | 180 | 47,6 | 112 |
| NaCl | 1,0 | 24 | 244 | 27 | 284 |

Testbedingungen: pH-Wert 7.0; 25° C; $10^6$Pa.

**Beispiel 2**

Gezeigt wird in diesem Beispiel der Einfluss von PEI mit verschiedenen Molekulargewichten auf die Membraneigenschaften sowie auch der Einfluss nur kurzer Reaktionszeiten.

Eine 25%ige Lösung eines chlormethylierten Polysulfons (1,6mäq-$CH_2Cl$/g) gemäss Beipiel 1 wird auf einen Träger vergossen. Die erhaltene Membran wird dann wie in Beispiel 1 modifiziert mit dem Unterschied, dass Polyethylenimine verschiedener Molekulargewichte (600, 1200 und 30 000) verwendet werden, wobei die Reaktionszeit 3 Minuten bei Raumtemperatur (anstelle von 5 Minuten bei 30° C) beträgt. Tabelle II enthält die Ergebnisse

**Tabelle II**

| MG Polyethylenimin | Farbstoffe d.Formel (108) | | NaCl | Löslichkeit der Membran in NMP |
|---|---|---|---|---|
| | Durchfluss $l/m^2 \cdot h$ | Rückhalt % | Rückhalt % | |
| keine Modifikation | 1701 | 91,9 | −18,6 | löslich |
| 600 | 1653 | 98,8 | − 8,2 | unlöslich |
| 1200 | 1296 | 99,5 | − 4,6 | unlöslich |
| 30000 | 1029 | 99,9 | 0,15 | unlöslich |

Testlösung: wässerige Lösung, die 0,15% Farbstoff der Formel (108) und 1% NaCl enthält.

**Beispiel 3**

Beispiel 1 wird wiederholt, wobei man jedoch eine 14%ige Polymerlösung zu einer Membran vergiesst, dann in Wasser von 4°C (anstelle der Dodecylsulfonatlösung) eintaucht und anschliessend die chemische Modifikation wie angegeben durchführt. Die erhaltene Membran hat einen Durchfluss für den Farbstoff der Formel (108) (0.15%ige Lösung) von 120 $1/m^2.h$ und ein Rückhaltevermögen von 97%, bei einem Druck von $10^6$ Pa. Die Werte für die nicht-modifizierte Membran: Durchfluss: 220 $1/m^2.h$. Rückhaltevermögen: 70%.

**Beispiel 4**

Beispiel 1 wird wiederholt mit einer Polysulfonmembran, deren Chlormethylgehalt 2,5 mäq/g beträgt.
In Tabelle III sind Durchfluss und Rückhaltevermögen angegeben.

**Beispiel 5**

Beispiel 1 wird wiederholt mit einem chlormethylierten Polymer mit einem Chlormethylgehalt von 0,5 mäq/g.
In Tabelle III sind Durchfluss und Rückhaltevermögen angegeben.

**Beispiel 6**

Beispiel 1 wird wiederholt, wobei als Lösungsmittel der Giesslösung ein Gemisch aus N-Methylpyrrolidon/Aceton (4:1, v/v) bei Raumtemperatur verwendet wird. Die Membran wird dann wie in Beispiel 1 angegeben modifiziert. Man verwendet jedoch anstelle des Farbstoffes der Formel (101) die farblose Verbindung der Formel (102a). In den Tabellen III und IV sind die Werte für Durchfluss und Rückhaltevermögen für diese Membran angegeben.

**Beispiel 7**

Beispiel 4 wird wiederholt, wobei man Tetraethylenpentamin (M.G. 189) anstelle von PEI (.M.G. 30 000 - 40 000) verwendet.
In Tabelle III sind Durchfluss und Rückhaltevermögen angegeben.

**Beispiel 8**

Beispiel 1 wird wiederholt, wobei man ein Polyethylenimin des Molekulargewichts 100 000 anstelle von PEI (M.G. 30 000-40 000) verwendet.
In Tabelle III sind Durchfluss und Rückhaltevermögen angegeben.

**Tabelle III**

| Membran Beispiel | Löslichkeit in N-Methyl-pyrrolidon nach der Modifikation | Vor der Modifikation | | Nach der Modifikation | |
|---|---|---|---|---|---|
| | | Rückhalte-vermögen % | Durch-fluss $l/m^2 \cdot h$ | Rückhalte-vermögen % | Durch-fluss $l/m^2 \cdot h$ |
| 4 | unlöslich | 83 | 140 | 99,0 | 160 |
| 5 | unlöslich | 77 | 107 | 93 | 144 |
| 6 | unlöslich | 93 | 200 | 99,3 | 70 |
| 7 | unlöslich | 77 | 107 | 91 | 93 |
| 8 | unlöslich | 91 | 180 | 99,6 | 85 |

Testbedingungen: pH-Wert 7,5; Raumtemperatur; $2 \cdot 10^6$ Pa.
Farbstoff der Formel (108) (0,15 %).

Testbedingungen: pH-Wert 7.5; Raumtemperatur; $2.10^6$ Pa.
Farbstoff der Formel (108) (0.15%).

**Tabelle IV**

Durchfluss und Rückhaltevermögen der gemäss Beispiel 6 modifizierten Membran

| gelöste Verbindung | Konzentration | Durchfluss $l/m^2 \cdot h$ | Rückhaltevermögen % |
|---|---|---|---|
| $Na_2SO_4$ | 1 % | 60 | 59 |
| p-Toluolsulfonsäure | 1 % | 48 | 50 |
| NaCl | 1 % | 65 | 14 |
| Farbstoff der Formel (108)[1] | 1,5 % | 55 | 99,6 |
| Wasser | | 80 | — |

Testbedingungen: pH-Wert 7,5; Raumtemperatur; $2 \cdot 10^6$ Pa.

[1] Nach 100 Betriebsstunden bei einem pH-Wert von 10 und 55°C zeigt die Membran ein Rückhaltevermögen von 99,3 %.

(a) Ein weiterer Stabilitätstest bei einem pH-Wert von 10 und 60°C zeigt, dass Flux und Rückhaltevermögen auch nach 4000 Betriebsstunden noch relativ stabil sind.

**Tabelle IVa**

| Messungen nach Stunden | 0 | 300 | 1000 | 2000 | 3000 | 4000 |
|---|---|---|---|---|---|---|
| Rückhaltevermögen % | 99,6 | 99,4 | 99,6 | 99,3 | 99,2 | 98,9 |
| Durchfluss ($l/m^2 \cdot d$) | 1241 | 1222 | 1300 | 1000 | 980 | 1340 |

Testlösung: 1,5%ige wässrige Lösung des Farbstoffs der Formel (108). Druck: $2.10^6$ Pa.

(b) Die Membran gemäss Beispiel 6 wird als röhrenförmige Membran (auf auf einem Non-wovens-Träger) hergestellt. Sie zeigt bei 50° C, einem pH-Wert von 10 und bei 20 bar einen Rückhalt von 98% und einen Durchfluss von 1100 $1/m^2$.d bei Verwendung einer Testlösung, die 4% des Farbstoffs der Formel (108) enthält. Nach 2000 Stunden Dauerbetrieb unter den gleichen Bedingungen - unterbrochen nur von periodischen Reinigungen der Membran - beträgt der Rückhalt 98,2% bei einem Durchfluss von 1200 $1/m^2$.h.

**Beispiel 9**

Beispiel 4 wird wiederholt, wobei man ein Polyvinylamin (M.G. 100 000) anstelle von PEI verwendet. Durchfluss und Rückhaltevermögen sind in Tabelle V angegeben.

**Beispiel 10**

Beispiel 4 wird wiederholt, wobei man einen Polyvinylalkohol anstelle von PEI verwendet. Durchfluss und Rückhaltevermögen sind in Tabelle V angegeben.

**Beispiel 11**

Beispiel 4 wird wiederholt, wobei man anstelle von PEI ein Polymer, hergestellt aus einem Diallylaminsalz (Beispiel 1 der britischen Patentanmeldung 2 027 614), mit wiederkehrenden Einheiten der Formel

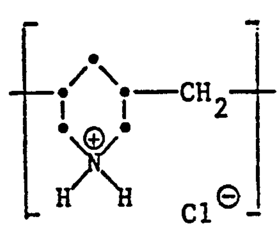

verwendet.

Durchfluss und Rückhaltevermögen sind in Tabelle V angegeben.

**Beispiel 12**

Beispiel 4 wird wiederholt, wobei ein Butylendiaminderivat eines Polyepichlorhydrins (US-A-1 558 807) mit wiederkehren Einheiten der Formel

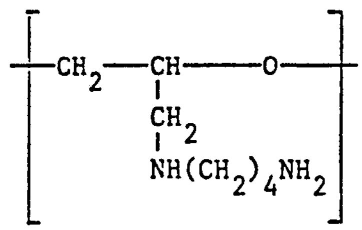

anstelle von PEI (M.W. 30000 - 40000) verwendet.
Durchfluss und Rückhaltevermögen sind in Tabelle V angegeben.

**Beispiel 13**

Beispiel 4 wird wiederholt, wobei man anstelle von PEI ein Polymer (EP-Anmeldung 8945, Beispiel 1) mit wiederkehrenden Einheiten der Formel

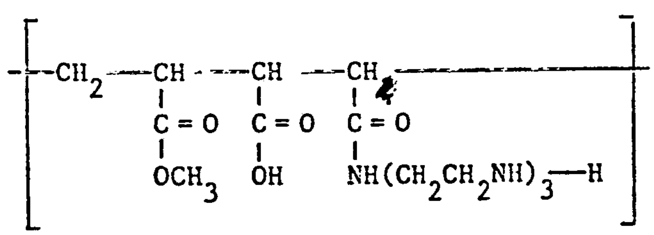

verwendet.
Durchfluss und Rückhaltevermögen sind in Tabelle V angegeben.

**Tabelle V**

Ersatz von PEI durch andere Polymere

| Beispiel | Rückhaltevermögen % | Durchfluss $l/m^2 \cdot h$ |
|---|---|---|
| 9 | 98.6 | 130 |
| 10 | 92.0 | 96 |
| 11 | 94 | 87 |
| 12 | 97.0 | 102 |
| 13 | 96 | 118 |

Testbedingungen: pH-Wert 7.0; 25°C; $2.10^6$ Pa; 0.15%ige Lösung des Farbstoffes der Formel (108).

**Beispiel 14**

Beispiel 1 wird wiederholt, wobei anstelle des Farbstoffs der Formel (101) die reaktive Verbindung der Formel (102a) verwendet wird und wie folgt bei diesem Modifikationsschritt verfahren wird: Die Membran wird 30 Minuten lang in eine Lösung von 4°C eingetaucht, die 1% der Verbindung der Formel (102a) und 10% Natriumchlorid enthält. Anschliessend wird sie noch tropfnass (Abtropfzeit: 10 Sekunden) 15 Minuten in eine 2%ige Natriumcarbonatlösung getaucht und dann 15 Minuten bei 50°C getrocknet. Die so erhaltene Membran zeigt unter den Testbedingungen von Beispiel 1 einen Durchfluss von 112 $1/m^2.h$ und ein Rückhaltevermögen von 98%.

**Beispiel 15**

Beispiel 14 wird wiederholt,wobei nan den Farbstoff der Formel (103) anstelle der Verbindung der Formel (102a) verwendet. Die so erhaltene Membran zeigt unter den Testbedingungen von Beispiel 1 einen Durchfluss von 60 1/m.h und ein Rückhaltevermögen von 99,2%.

**Beispiel 16**

Zu einer Lösung von 5 g eines chlormethylierten Polysulfons (1.77 mäq/g) in 100 ml Dimethylformamid werden 6 g Phthalimid-kalium gegeben und 15 Stunden bei 70°C gerührt. Die Reaktionssuspension wird dann filtriert und das Polymer in Methanol ausgefällt. Das Polymer wird dann in eine 10%ige äthanolische Hydrazinlösung (Hydrazin 95%) gegeben und 12 Stunden am Rückfluss erhitzt. Das Polymer wird dann abfiltriert, mit Methanol gewaschen und getrocknet. Der Amino ($-NH_2$)-gehalt des aminomethylierten Polysulfons beträgt 1,17 mäq/g.

Eine 15%ige Lösung dieses Polysulfons in Dimethylformamid wird hergestellt, filtriert, als 0,2 mm dicke Schicht auf ein Polyester-Nonwoven Trägermaterial gegossen und anschliessend sofort in ein Wasserbad von 25°C eingetaucht.

Nach 12 Stunden (Auslaugphase) in diesem Bad gibt man die Membran für eine Stunde in eine 2%ige Cyanurchloridlösung von 0°C (Lösungsmittel: Wasser/Aceton, 4:1, v/v), wäscht sie während 30 Minuten in Eiswasser und gibt sie dann in eine 10%ige Polyethyleniminlösung (M.G. 30000-40000). Nach 30 Minuten wird sie aus dieser Lösung entfernt, eine Stunde mit Wasser gewaschen und dann wie in Beispiel 1 beschrieben mit dem Farbstoff der Formel (101) umgesetzt.

In Tabelle VI sind Durchfluss und Rückhaltevermögen dieser Membran angegeben.

Tabelle VI

| gelöster Stoff | Konzentration % | Vor der Modifikation | | Nach der Modifikation | |
|---|---|---|---|---|---|
| | | Durchfluss $l/m^2 \cdot h$ | Rückhaltevermögen % | Durchfluss $l/m^2 \cdot h$ | Rückhaltevermögen % |
| Farbstoff der Formel (108) | 0.15 | 220 | 70 | 80 | 98.5 |
| Farbstoff der Formel (109) | 0.15 | 150 | 84 | 64 | 99.3 |
| NaCl | 1.0 | 142 | 9.0 | 82 | 16.0 |
| $Na_2SO_4$ | 1.0 | 120 | 41 | 75 | 76 |
| p-Toluolsulfonsäure | 1.0 | 112 | 22 | 54 | 54 |

Testbedingungen: Raumtemperatur; $10^6$ Pa.

**Beispiel 17**

6 g eines chlormethylierten Polysulfons gemäss Beispiel 1 (1,0 mäq/g),gelöst in 15⁰ ml Dioxan, werden zusammen mit einem f-fachen Ueberschuss (⁵ Aequivalente) Diaminobutan 24 Stunden bei 50°C unter Rühren zur Reaktion gebracht.

Das Polymer wird in eine 0,01 N Salzsäurelösung ausgefällt, abfiltriert und getrocknet.

Der Gehalt an Aminogruppe beträgt 1,1 mäq/g. Wie in Beispiel 1 beschrieben wird das Polymer zu einer Membran vergossen und gemäss Beispiel 16 modifiziert.

In Tabelle VII sind der Durchfluss und das Rückhaltevermögen der Membran vor und nach der Modifikation angegeben.

**Beispiel 18**

Zu 6 g eines chlormethylierten Polysulfons in 100 ml Dimethylformamid werden 2 g Natriumcyanid gegeben. Das Reaktionsgemisch wird 12 Stunden bei 60°C gerührt. Die orange-farbene Reaktionslösung wird dann in Wasser gegossen, das cyanomethylierte Polysulfon abfiltriert und im Vakuum bei 50°C getrocknet. Der Cyangehalt beträgt 0,8 mäq/g.

Gemäss Beispiel 1 wird das Polymer zu einer Membran vergossen, die dann wie folgt modifiziert wird:

(a) wässrige Lösung, die 10% Hydroxylamin und 7,5% Natriumcarbonat enthält; Reaktionszeit: 5 Minuten bei 55°C; anschliessend 1/2 Stunde Waschen in Wasser;

(b), wässrige, 2%ige Cyanurchloridlösung, pH-Wert 9 bis 10; Reaktionszeit: 15 Minuten bei 0°C; anschliessend 10 Minute Waschen mit Wasser bei 0°C;

(c) wässrige, 10%ige Polyethyleniminlösung (M.G. 30 000); Reaktionszeit: 10 Minuten, pH-Wert 8,5; anschliessend 2 Stunden Waschen mit Wasser und Umsetzung mit dem Farbstoff der Formel (101) gemäss Beispiel 1.

In Tabelle VII sind Durchfluss und Rückhaltevermögen dieser Membran vor und nach der Modifikation angegeben.

**Beispiel 19**

Zu 0,5 g eines chlormethylierten Polysulfons (1,4 mäq/g), gelöst in 100 ml Dimethylformamid werden 10 g Natriumacetat hinzugefügt. Das Reaktionsgemisch wird dann 12 Stunden bei 60°C gerührt. Nach dem Abkühlen der Lösung wird das Polymer in Wasser ausgefällt, abfiltrier und gewaschen.

Das Polymer wird dann in einer 7%igen Natriumhydroxidlösung (in 200ml Aethanol / 100 ml Wasser) suspendiert und 12 Stunden bei 50°C gerührt. Die Lösung wird dann mit konzentrierter Salzsäure neutralisiert und das Polymer wird abfiltriert, gewaschen und getrocknet. Der Hydroxymethylgehalt des Polymers beträgt 0,9 mäq/g.

Dieses Polymer wird dann wie in Beispiel 16 beschrieben modifiziert.

In Tabelle VII sind Durchfluss und Rückhaltevermögen dieser Membran vor und nach der Modifikation angegeben.

**Tabelle VII**

| Membran | Vor der Modifikation | | | | Nach der Modifikation | | | |
|---|---|---|---|---|---|---|---|---|
| | 0.15% Farbstoff der Formel (108) | | 1% NaCl | | 0.15% Farbstoff der Formel (108) | | 1% NaCl | |
| | Rückhaltevermögen % | Durchfluss $l/m^2 \cdot h$ | Rückhaltevermögen % | Durchfluss $l/m^2 \cdot h$ | Rückhaltevermögen % | Durchfluss $l/m^2 \cdot h$ | Rückhaltevermögen % | Durchfluss $l/m^2 \cdot h$ |
| Beispiel 17 | 50 | 186 | 5 | 220 | 97 | 115 | 20 | 140 |
| Beispiel 18 | 35 | 74 | 14 | 85 | 88 | 84 | 25 | 80 |
| Beispiel 19 | 62 | 86 | 20 | 122 | 92 | 34 | 36 | 78 |

Testbedingungen: pH-Wert 7,0; Raumtemperatur; 2 $10^6$ Pa.

**Beispiel 20**

Beispiel 6 wird wiederholt, wobei als Lösungsmittel der Giesslösung, die das chlormethylierte Polysulfon gemäss Beispiel 1 enthält, ein Gemisch aus N-Methylpyrrolidon/Aceton (4:1 v/v) bei Raumtemperatur verwendet wird. Mit der Giesslösung giesst man eine 0,2 mm dicke Schicht auf einen Polyester-Non-wovens-Träger und tauchtdiese dann sofort in eine wässrige, 0,5%ige Natriumdodecylsulfonatlösung von 4°C.

Nach 24 Stunden entfernt man die Membran aus dieser Lösung und modifiziert sie in einem ersten Schritt in einer 10%igen wässrigen Lösung von Polyäthylenimin (PEI) (M.W. 30 000-40 000) bei 30°C während 5 Minuten. Anschliessend wird die Membran 2 Stunden in Wasser gewaschen. Dann gibt man die Membran in eine 2%ige Cyanurchloridlösung (Wasser/Aceton 4:1, v/v) bei einem pH-Wert von 9 und 0°C, behandelt sie 15 Minuten in dieser Lösung, nimmt sie dann heraus und taucht sie noch tropfnass (Abtropfzeit: 10 Sekunden) in eine 2%ige Natriumcarbonatlösung von Raumtemperatur, in der sie dann 30 Minuten verbleibt.

Die erhaltene Membran zeigt gegenüber 1%igen Natriumsulfat- bzw. Natriumchloridlösungen ein Rückhaltevermögen von 51% bzw. 19%. Der Durchfluss (bei $2.10^6$Pa)betragt 43 bzw. 50 $1/m^2.h$).

**Beispiel 21**

Ein Polysulfon mit wiederkehrenden Einheiten der Formel

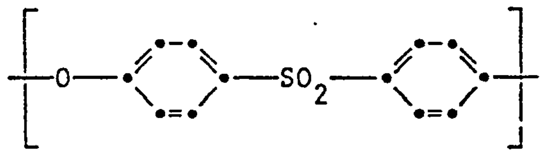

und einem Chlormethylgehalt von 1,0 mäq/g wird gemäss Beispiel 1 zu einer Membran vergossen und modifiziert.

Die erhaltene Membran zeigt ein Rückhaltevermögen und einen Durchfluss gegenüber dem Farbstoff der Formel (109) (0,15%ige Lösung, $2.10^6$ Pa) von 98,5% und 75 $1/m^2$.h.

**Beispiel 22**

Ein handelsübliches Polysulfon mit wiederkehrenden Einheiten der Formel

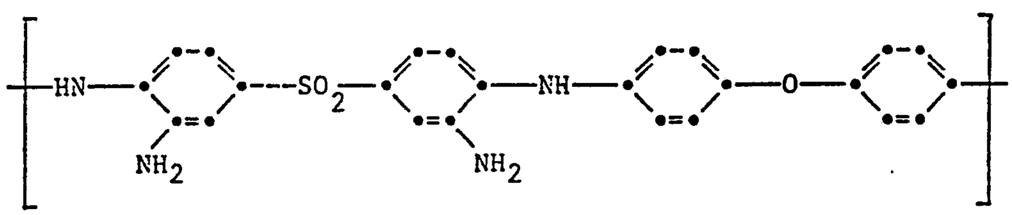

wird gemäss Desalination 21, 183-194 (1977) hergestellt.

Eine N-Methylpyrrolidinlösung, die 15% des obigen Polymers und 30% $LiNO_3$ enthält, wird auf eine Glasplatte gegossen, 8 Minuten bei 130°C getrocknet, abgekühlt und dann in Eiswasser eingetaucht. Nach 12 Stunden (Auslaugphase) wird die Membran während 10 Minuten bei 0°C und einem pH-Wert von 7 in eine 2%ige Cyanurchloridlösung (Wasser/ Aceton: 4:1, v/v) eingetaucht, in Eiswasser 10 Minuten lang gewaschen, dann 30 Minuten in eine 10%ige Polyethyleniminlösung (M.G. 30 000-40 000) (pH-Wert 8,5) getaucht und schliesslich mit dem Farbstoff der Formel (101) wie in Beispiel 1 umgesetzt.

Das Rückhaltevermögen und der Durchfluss ($2.10^6$Pa, 25°C Testlösung des Farbstoffs der Formel (108) der Membran vor und nach der Modifikation betragen 88,4% und 130 $1/m^2$-h bzw. 98%. und 50 $1/m^2$.h.

Die modifizierte Membran ist vernetzt und daher unlöslich in N-Methylpyrrolidon.

**Beispiel 23**

Beispiel 4 wird wiederholt, wobei jedoch die folgenden Aenderungen angebracht werden: Nachdem die Membran gegossen ist, wird sie mit einer 10%igen Diaminobutanlösung bei 50°C während 4 Stunden behandelt, dann mit Wasser gewaschen und schliesslich gemäss Beispiel 16 mit Cyanurchlorid, PEI und Reaktivfarbstoff behandelt.

Die erhaltene Membran hat ein Rückhaltevermögen und einen Durchfluss ($2.10^6$Pa,0,15%ige Testlösung des Farbstoffs der Formel (109)) von 99% und 80 $1/m^2$.h.

**Beispiel 24**

10 des Polysulfons mit wiederkehrenden Einheiten der Formel

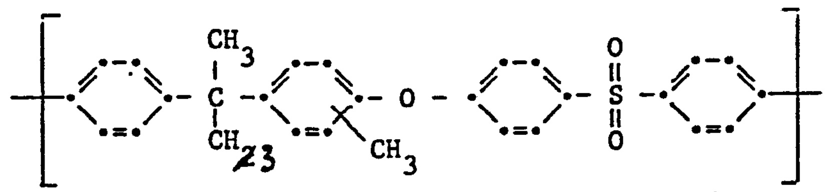

werden in Tetrachloräthan gelöst und mit 12 g N-Bromsuccinimid (NBS) und 0,5 g Benzoylperoxyd versetzt. Die Reaktionslösung wird dann 6 Stunden bei 80°C gehalten. Das Reaktionsprodukt wird in Methanol ausgefällt und durch erneutes Lösen und Wiederausfällen gereinigt. Es wird dann eine 25%ige Lösung des brommethylierten Polymers in NMP hergestellt, die nach dem Filtrieren auf einen Polyester-Nonwoven-Träger gegossen wird. Die erhaltene Membran wird dann wie in Beispiel 1 beschrieben modifiziert. Rückhaltevermögen und Durchfluss (0,15%ige Lösung des Farbstoffs der Formel (108),2.$10^6$Pa) betragen für die nicht-modifizierte Membran 86% und 110 1/m $^2$.h und 98% und 72 1/$m^2$.h für die modifizierte Membran.

**Beispiel 25**

Ein Polysulfon mit wiederkehrenden Einheiten der Formel

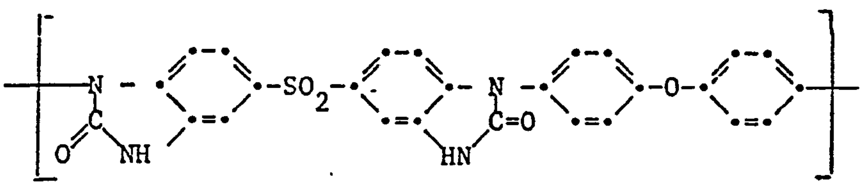

wird nach der Vorschrift gemäss Desalination 21, 183-194 (1977) hergestellt. Eine 25%ige Lösung des Polysulfons in NMP wird hergestellt, filtriert und auf einen Nonwoven–Träger gegossen. Die erhaltene Membran wird dann gemäss Beispiel 22 modifiziert. Die modifizierte Membran weist ein Rückhaltevermögen von 99,2% gegenüber einer Farbstofflösung des Farbstoffs der Formel (108) (0,15%ige Lösung, 2.$10^6$ Pa) auf.

**Beispiel 26**

Herstellung eines Polysulfons mit wiederkehrenden Einheiten der Formel

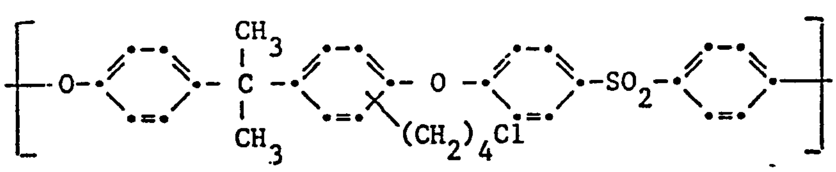

Zu 40 Mol des nicht alkylhalogenierten Polysulfons (P-1700 der Union Carbide Corp.), gelöst in 300 ml Tetrahydrofuran (THF), werden unter Rühren 44 Mol n-Butyllithium bei 0°C unter Stickstoffatmosphäre tropfenweise zugegeben. Nach beendeter Zugabe wird die Temperatur des Reaktionsgemisches auf Raumtemperatur erhöht und die Reaktion während 2 Stunden bei dieser Temperatur zu Ende geführt.

Anschliessend wird das Reaktionsgemisch tropfenweise und unter Eiskühlung mit einer Lösung (in THF) von l-Chlor-4-hydroxybutanol (mit Dihydropyranschutzgruppen) versetzt. Nach beendeter Zugabe wird das Reaktionsgemisch 5 Stunden bei 5°C und dsnn 2 Stunden bei Rückflusstemperatur gehalten. Dann werden 50 ml Thionylchlorid bei Raumtemperatur zugegeben und das Reaktionsgemisch erneut 1 Stunde bei Rückflusstemperatur gehalten. Nach Entfernung des Lösungsmittels und des überschüssigen Thionylchlorids wird das erhaltene n-Chlorbutyl-Polysulfon gründlich mit Wasser gewaschen.

(G. Schill, E. Logemann, Chem. Ber, 106, 2910 (1973); H.W. Gschwerd, H.R. Roddriguez, Org. Reactions 26, 62).

Eine 25%ige Lösung des Polymers in NMP wird zu einer Membran vergossen, die dann wie in Beispiel 1 beschrieben modifiziert wird. Die erhaltene modifizierte Membran zeigt ein Rückhaltevermögen von 97,5%

gegen eine 0,15%ige Farbstofflösung des Farbstoffs der Formel (108) bei $2.10^6$ Pa.

**Beispiel 27**

Beispiel 20 wird wiederholt, wobei man jedoch anstelle von Cyanurchlorid die Verbindung der Formel (102 b) einsetzt.

Durchfluss und Rückhaltevermögen der so erhaltenen Membran betragen 100 l/m.h und 99,1% (0,15%ige Lösung des Farbstoffs der Formel (108) bei $2.10^6$ Pa.

**Beispiel 28**

Trennzellen werden mit Flachmembranen (gemäss Beispiel 6) bestückt und zur Reinigung eines Abwassers mit einem hohen Anteil an organischem Kohlenstoff verwendet, wobei die folgenden Bedingungen eingehalten werden: 50 bis 55° C, pH-Wert: 10, Druck:$2.10^6$ Pa, Testzeit (insgesamt): 100 Stunden.

In Tabelle VIII sind die Ergebnisse angegeben.

**Tabelle VIII**

| Zeit (Stunden) | Flux $l/m^2 \cdot d$ | Rückhaltevermögen |
|---|---|---|
| 0 | 960 | 90 |
| 24 | 720 | 85 |
| 50 | 860 | 92 |
| 100 | 900 | 85 |

Die Prozentzahlen zeigen, dass durch die Membranfiltration bis zu 92% des organischen Kohlenstoffs aus dem Abwasser entfernt werden können.

**Beispiel 29**

Ein Polysulfon mit wiederkehrenden Einheiten der Formel

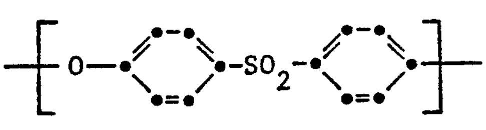

wird zu einer röhrenförmigen Membran vergossen.

Rückhaltevermögen und Durchfluss betragen 80% und 4320 $1/m^2$.d gegenüber dem Farbstoff der Formel (108) (1,5%ige Lösung, $2,5\text{-}10^6$ Pa, Raumtemperatur).

Diese Membran wird dann wie folgt modifiziert:

3 g p-Phenylendiamin werden in 36 ml konzentrierter Salzsäure gelöst, in 400 ml Eiswasser aufgenommen und dann mit 100 ml einer 4%igen Natriumnitritlösung versetzt.

Anschliessend wird der pH-Wert der Lösung auf 13 eingestellt, wobei die Temperatur bei 0° C gehalten wird. In diese Lösung (0° C) wird die Membran eingetaucht und 10 Minuten darin belassen. Anschliessend wäscht man sie 30 Minuten in Leitungswasser, behandelt sie dann für 5 Minuten in einer 2%igen wässerigen

Suspension von Cyanurchlorid (pH-Wert: 9) bei 0°C, wascht sie erneut für 15 Minuten in Eiswasser, behandelt sie dann für 5 Minuten bei Raumtemperatur mit einer 10%igen Polyethyleniminlösung (MG - 30'000) (pH-Wert: 8,5), wäscht sie dann 2 Stunden mit Leitungswasser und behandelt sie dann in einer 1%igen Lösung des Farbstoffes der Formel (104) für 15 Minuten und für weitere 30 Minuten in einer 5%igen Natriumcarbonatlösung.

Man erhält eine vernetzte Membran, die sehr stabil gegen Druckeinwirkung und Lösungsmittel ist. Ausserdem ist sie sehr temperaturbeständig.

Die Werte für das Rückhaltevermögen und den Durchfluss (getestet wie oben angegeben) betragen 99% und 135 l/m².h.

**Patentansprüche**

1. Semipermeable Membran aus Polysulfonen, dadurch gekennzeichnet, dass sie aus einem membranbildenden modifizierten Polysulfon mit wiederkehrenden Einheiten der Formel

$$(1) \quad -\!\!\left[ M_1 - R_1 - M_2 - R_2 - SO_2 - R_3 \right]\!\!-$$

besteht, worin $M_1$ und $M_2$ unabhängig voneinander eine direkte chemische Bindung, -O- oder -NH- bedeuten, $R_1$ eine direkte chemische Bindung oder ein Brückenglied der Formeln

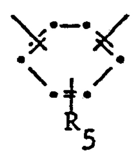
oder
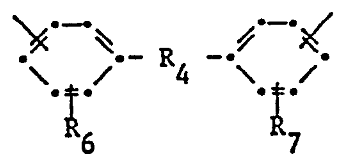

ist, wobei - wenn $R_1$ die direkte chemische Bindung ist - $M_1$ und $M_2$die angegebenen Bedeutungen haben, jedoch nicht gleichzeitig -O- sind, $R_2$ und $R_3$ unabhängig voneinander Brückenglieder der Formeln

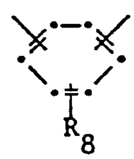
oder
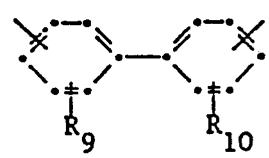

sind, die Arylenreste $R_1$, $R_2$ und $R_3$ gegebenenfalls mit Alkyl mit 1bis 4 Kohlenstoffatomen weitersubstituiert sind, $R_4$ eine direkte chemische Bindung, -O-, Alkylen mit 1 bis 4 Kohlenstoffatomen, gegebenenfalls substituiert mit oder unterbrochen durch Cycloalkyl(en) oder Aryl(en) mit höchstens 7 Kohlenstoffatomen, oder Alkenylen mit 2 bis 4 Kohlenstoffatomen ist, $R_5$ bis $R_{10}$ unabhängig voneinander Wasserstoff oder $-R_{11}NH_2$,

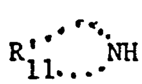

oder $R_{13}OH$, chemisch modifiziert durch Umsetzung mit

a) einer monomoren Verbindung mit mindestens zwei funktionellen Gruppen,

b) einem polyfunktionellen geradkettigen oder verzweigten Oligomer oder Polymer und

c) einer nichtionischen oder ionischen Verbindung mit mindestens einer, vorzugsweise zwei, zur Reaktion mit b) befähigten Gruppe(n),

$-R_{12}X$ oder $-R_{13}CHO$, chemisch modifiziert durch Umsetzung mit den Komponenten b) und c), oder

$R_{13}CN$ sind, chemisch modifiziert durch Reaktion mit Hydroxylamin sowie den Komponenten a), b) und c)

$-R_{11}-$ eine direkte chemische Bindung, $-CH_2-$, $(CH_2)pNH(CH_2)_{2-6}$, -N=N-

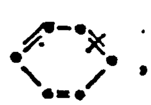

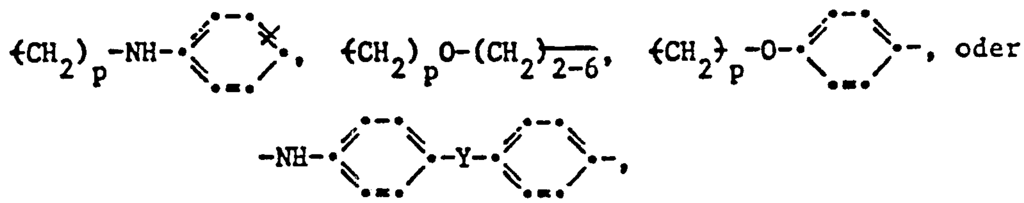

, $-(CH_2)_pO-(CH_2)_{2-6}$, … , oder … ,

$R'_{11}$ die Atome darstellt, die zur Bildung eines heterocyclischen Ringes notwendig sind, der an die Polymerkette ankondensiert ist, $-R_{12}$ $-C_nH_{2n}$ -, $-R_{13}$- eine direkte chemische Bindung oder $-C_mH_{-2m}$, X Halogen, Y -O-, $SO_2$ oder

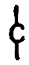

$(CH_3)_2$, n eine ganze Zahl von 1 bis 6, m eine ganze Zahl von 1 bis 5 und p Null oder 1 ist, und der Substitutionsgrad der von Wasserstoff verschiedenen Substituenten $R_5$ bis $R_{10}$ zwischen 0,3 und 3,5 Milliäquivalenten/g liegt.

2. Semipermeable Membran nach Anspruch 1, dadurch gekennzeichnet, dass das modifizierte Polysulfon wiederkehrende Einheiten der Formel

$$(2)\quad \left[ M_1 - R_1 - M_2 - R_2 - SO_2 - R_3 \right]$$

aufweist, worin $M_1$ und $M_2$ -O- oder -NH- sind und $R_1$, $R_2$ und $R_3$ die im Anspruch 1 angegebenen Bedeutungen haben.

3. Semipermeable Membran nach Anspruch 1, dadurch gekennzeichnet, dass das modifizierte Polysulfon wiederkehrende Einheiten der Formel

$$(3)\quad \left[ O - R_2 - SO_2 - R_3 \right]$$

aufweist, worin $R_2$ und $R_3$ die in Anspruch 1 angegebenen Bedeutungen haben.

4. Semipermeable Membran nach Anspruch 1, dadurch gekennzeichnet, dass das modifizierte Polysulfon wiederkehrende Einheiten der Formel

$$(4)\quad \left[ R_1 - O - R_2 - SO_2 - R_3 \right]$$

aufweist, worin $R_1$, $R_2$ und $R_3$ die in Anspruch 1 angegebenen Bedeutungen haben.

5. Semipermeable Membran nach Anspruch I, dadurch gekennzeichnet, dass das modifizierte Polysulfon wiederkehrende Einheiten der Formel

$$(5)\quad \left[ O - R_1 - O - R_2 - SO_2 - R_3 \right]$$

aufweisen, worin $R_1$ ein Brückenglied der Formeln

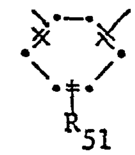

oder

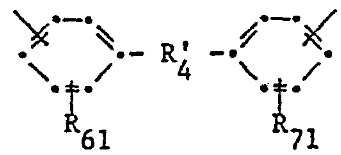

ist, $R_2$ und $R_3$ unabhängig voneinander Brückenglieder der Formeln

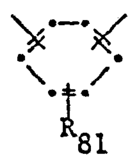

oder

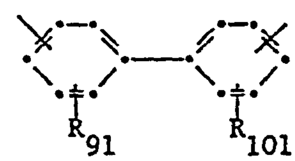

sind, $R'_4$ eine direkte chemische Bindung oder Alkylen mit 1 bis 4 Kohlenstoffatomen ist, $R_{51}$ bis $R_{101}$ unabhängig voneinander Wasserstoff oder $-CH_2NH_2$, $-CH_2OH$ oder $-NH_2$, chemisch modifiziert durch Umsetzung mit den Komponenten (a), (b) und (c),

$-CH_2X$, worin X Halogen ist, chemisch modifiziert durch Umsetzung mit den Komponenten (b) und (c) oder

$-CH_2CN$, chemisch modifiziert durch Reaktion mit Hydroxylamin sowie den Komponenten (a), (b) und (c), sind, und der Substitutionsgrad der von Wasserstoff verschiedenen Substituenten $R_{51}$ bis $R_{101}$ zwischen 0,3 und 3,5 Milliäquivalenten/g liegt.

6. Semipermeable Membran nach Anspruch 5, dadurch gekennzeichnet, dass das modifizierte Polysulfon wiederkehrende Einheiten der Formel

(6)

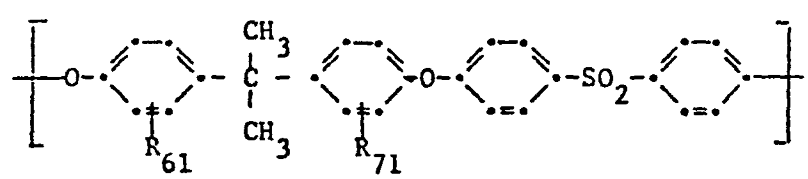

aufweist, worin $R_{61}$ und $R_{71}$ die im Anspruch 5 angegebenen Bedeutungen haben und der Substitutionsgrad der von Wasserstoff verschiedenen Substituenten $R_{61}$ und $R_{71}$ zwischen 0,3 und 3,5 Milliäquivalenten/g liegt.

7. Semipermeable Membran nach Anspruch 6, dadurch gekennzeichnet, dass $R_{61}$ und/oder $R_{71}$

$-CH_2NH_2$, chemisch modifiziert durch Umsetzung mit

(a) organischen Verbindungen, die reaktive Mehrfachbindungen oder Epoxid-, Aziridin-, Aldehyd-, Imidat-, Isocyanat-, Isothiocyanat-, Hydroxyl-, Säureanhydrid-, Säurechlorid-, Kohlensäureimidhalogenidoder N-Methylolgruppen enthalten oder mit Verbindungen, die als tertiäre Amine oder als Anionen abspaltbare Substituenten, oder mit Verbindungen, die Kombinationen dieser Gruppen (Substituenten) enthalten,

(b) hydrophilen, polyfunktionellen, aliphatischen oder aromatischen Oligomeren oder Polymeren, die Amino-, Hydroxyl- oder Thiolgruppen enthalten, und

(c) nicht-ionischen Verbindungen oder Verbindungen mit mindestens einer Sulfo-($-SO_3H$)-, Carboxy($-COOH$)- oder Ammoniumgruppe, wobei die Sulfound Carboxylgruppe auch in Salzform vorliegen kann, und mindestens einer, vorzugsweise zwei, mit der Komponente (b) reaktionsfähigen Gruppe(n),

$-CH_2X$, worin X Halogen ist, chemisch modfiziert durch Umsetzung mit den Komponenten (b) und (c), oder

$-CH_2CN$ sind, chemisch modifiziert durch Reaktion mit Hydroxylamin sowie den Komponenten (a), (b) und (c).

8. Semipermeable Membran nach Anspruch 7, dadurch gekennzeichnet, dass die Komponente (a) ein cyclisches Kohlensäureimidhalogenid, ein Isocyanat, ein Isothiocyanat oder eine N-Methylolverbindung ist.

9. Semipermeable Membran nach Anspruch 7, dadurch gekennzeichnet, dass die Komponente (b) ein Polyethylenimin, Polyvinylalkohol, Cellulosederivat, Polyvinylamin, Polyvinylanilin, Polydiallylamin, ein aminomodifiziertes Polyepihylogenhydrin, ein Kondensationsprodukt aus Dicyandiamid, Aminsalzen und Formaldehyd, ein Diaminokondensationsprodukt eines Polyanhydrids, ein aminoalkyliertes Polysulfon oder ein aminoalkyliertes Polyphenylenoxid ist.

10. Semipermeable Membran nach Anspruch 7, dadurch gekennzeichnet, dass die Komponte (c) eine farbige Verbindung ist.

11. Semipermeable Membran nach Anspruch 7, dadurch gekennzeichnet, dass die Komponente (c) ein farbloses nichtionisches Kohlensäureimidhalogenid, Dicarbonsäuredihalogenid, ein Tricarbonsäuretrihalogenid oder Dialdehyd ist.

12. Verfahren zur Herstellung einer semipermeablen Membran nach einem der Ansprüche 1 bis 11, dadurch gekennzeichnet, dass man auf ein poröses Trägermaterial eine Lösung giesst, die

(I) ein membranbildendes Polysulfon mit wiederkehrenden Einheiten der Formel

$$(17) \qquad -\!\!\left[ M_1 - R'_1 - M_2 - R'_2 - SO_2 - R'_3 \right]\!\!- \quad ,$$

worin $M_1$ und $M_2$ unabhängig voneinander eine direkte chemische Bindung, -O- oder -NH- sind, $R'_1$ eine direkte chemische Bindung oder ein Brückenglied der Formeln

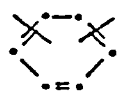 oder 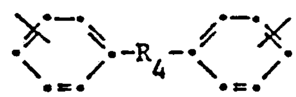

ist, wobei - wenn $R'_1$ die direkte chemische Verbindung ist - $M_1$ und $M_2$ die angegebenen Bedeutungen haben jedoch nicht gleichzeitig -O- sind, $R'_2$ und $R'_3$ unabhängig voneinander Brückenglieder der Formeln

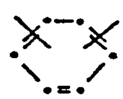 oder 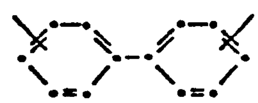

sind, die Arylenreste $R'_1$,$R'_2$ und $R'_3$ gegebenenfalls mit Alkyl mit1 bis 4 Kohlenstoffatomen substituiert sind, $R_4$ eine direkte chemische Bindung, -O-, Alkylen mit 1 bis 4 Kohlenstoffatomen, gegebenenfalls substituiert mit oder unterbrochen durch Cycloalkyl(en) oder Aryl(en) mit höchstens 7 Kohlenstoffatomen, oder Alkenylen mit 2 bis 4 Kohlenstoffatomen ist, und

(II) ein polares organisches Lösungsmittel oder Lösungsmittelgemisch für das Polysulfon sowie gegebenenfalls Teillösungsmittel, Nicht-Lösungsmittel, Elektrolyte und/oder oberflächenaktive Hilfsmittel enthält, die (nicht-koagulierte) Membran mit einem Lösungsmittel, das mit dem polaren Lösungsmittel mischbar, aber ein Nichtlösungsmittel für die Membran ist, in Kontakt bringt, um die Membran zu koagulieren, in die so erhaltene Membran

-(A) $-R_{11}NH_2$ oder $-R_{13}OH$ Substituenten einführt und diese dann chemisch modifiziert durch Umsetzung mit

(a) einer monomeren Verbindung mit mindestens zwei funktionellen Gruppen,

(b) einem polyfunktionellen geradkettigen oder verzweigten Oligomer oder Polymer und

(c) einer nicht-ionischen oder ionischen Verbindung mit mindestens einer, vorzugsweise zwei, zur Reaktion mit (b) befähigten Gruppe(n),

-(B) $-R_{12}X$ oder $-R_{13}CHO$ Substituenten einführt und diese dann chemisch modifiziert durch Umsetzung mit den Komponenten (b) und (c) oder

-(C) $-R_{13}CN$ Substituenten einführt und diese dann chemisch modifiziert durch Umsetzung mit Hydroxylamin und den Komponenten (a), (b) und (c), worin $R_{11}$, $R_{12}$, $R_{13}$ und X die in Anspruch 1 angegebenen Bedeutungen haben.

13. Verfahren zur Herstellung einer semipermeablen Membran nach einem der Ansprüche 1 bis 11, dadurch gekennzeichnet, dass man auf ein (poröses) Trägermaterial eine Lösung zu einer Membran giesst, die

(I) ein membranbildendes Polysulfon mit wiederkehrenden Einheiten der Formel

$$(18) \qquad -\!\!\left[ M_1 - R''_1 - M_2 - R''_2 - SO_2 - R''_3 \right]\!\!- \quad ,$$

worin $M_1$ und $M_2$ unabhängig voneinander eine direkte chemische Bindung, -O- oder -NH sind, $R''_1$ eine direkte chemische Bindung oder ein Brückenglied der Formeln

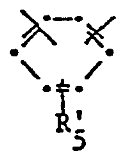 oder 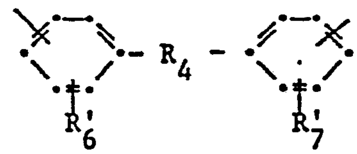 ,

wobei, wenn $R''_1$ die direkte chemische Bindung ist, $M_1$ und $M_2$ die angegebenen Bedeutungen haben, jedoch nicht gleichzeitig -O- sind, $R''_2$ und $R''_3$ unabhängig voneinander Brückenglieder der Formeln

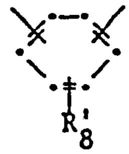 oder 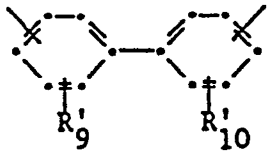

sind, die Arylenreste $R''_1$, $R''_2$ und $R''_3$ gegebenenfalls mit Alkyl mit 1 bis 4 Kohlenstoffatomen substituiert sind, $R_4$ eine direkte chemische Bindung, -O-, Alkylen mit 1 bis 4 Kohlenstoffatomen, gegebenenfalls substituiert mit oder unterbrochen durch Cycloalkyl(en) oder Aryl(en) mit höchstens 7 Kohlenstoffatomen oder Alkenylen mit 2 bis 4 Kohlenstoffatomen ist, $R'_5$ bis $R'_{10}$ unabhängig voneinander Wasserstoff,

(A) $-R_{11}-NH_2$,-

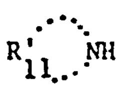

oder $-R_{13}OH$,

(B) $-R_{12}X$ oder $-R_{13}CHO$ oder

(C) $-R_{3}CN$, sind

worin $-R_{11}-$, $-R'_{11}$, $-R_{12}-$, $-R_{13}-$ und X die im Anspruch 1 angegebenen Bedeutungen haben, und der Substitutionsgrad der von Wasserstoff verschiedenen Substituenten $R'_5$ bis $R'_{10}$ zwischen 0,3 und 6 Milliäquivalenten/g liegt,

(II) ein polares organisches Lösungsmittel oder Lösungsmittelgemisch für das Polysulfon sowie gegebenenfalls Teillösungsmittel, Nicht-Lösungsmittel, Elektrolyte und/oder oberflächenaktive Hilfsmittel enthalt, die (nicht koagulierte) Membran dann mit einem Lösungsmittel, das mit dem polaren Lösungsmittel mischbar, aber ein Nichtlosungsmittel für die Membran ist, in Kontakt bringt, um die Membran zu koagulieren, und die so erhaltene Membran dann chemisch modifiziert durch Umsetzung mit

(a) einer monomeren Verbindung mit mindestens zwei funktionellen Gruppen,

(b) einem polyfunktionellen, geradkettigen oder verzweigten Oligomer oder Polymer und

(c) einer nichtionischen oder ionischen Verbindung mit mindestens einer, vorzugsweise zwei zur Reaktion mit (b) befähigten Gruppe(n), sofern $R'^5$ bis $R'_{10}$ die Bedeutung von (A) haben,

-durch Umsetzung mit den Komponenten (b) und (c), sofern $R'_5$ bis $R'_{10}$ die Bedeutung von (B) haben, und

-durch Umsetzung mit Hydroxylamin sowie den Komponenten (a), (b) und (c), sofern $R'_5$ bis $R'_{10}$ die Bedeutung von (C) haben.

14. Verfahren nach einem der Ansprüche 12 und 13, dadurch gekennzeichnet, dass man Flach- oder Röhrenmembranen oder Hohlfasern herstellt.

15. Verwendung der Membranen nach einem der Ansprüche 1 bis 11 zur Trennung einwertiger Ionen niedrigen Ionengewichts von vorzugsweise mehrwertigen Ionen mit niedrigem oder höherem Ionengewicht oder von einwertigen Ionen mit höherem Ionengewicht.

16. Verwendung nach Anspruch 15, dadurch gekennzeichnet, dass organische und metallorganische ionogene Substanzen (ionische Farbstoffe) von den Nebenprodukten (Salzen) in einer Reaktionsmischung getrennt werden.

17. Verwendung nach Anspruch 15, dadurch gekennzeichnet, dass Abwässer aus der Farbstoffproduktion durch Abtrennung der Farbstoffe gereinigt werden.

18. Verfahren zum Trennen von Substanzen, dadurch gekennzeichnet, dass man wässrige Lösungen von Substanzmischungen durch eine Membran nach einem der Ansprüche 1 bis 11 fliessen lässt.

19. Ultrafiltrations- und Umkehrosmoseverfahren zur Konzentrierung und/oder Reinigung von Flüssigkeiten (Lösungen) oder zur Trennung von gelösten Komponenten, dadurch gekennzeichnet, dass man die Flüssigkeiten (Lösungen) auf einer Seite einer Membran gemäss einem der Ansprüche 1 bis 11 vorlegt und unter Anwendung von Druck, der grösser als der osmotische Druck der Lösungen ist, die Lösungen filtriert.

## Claims

1. A semipermeable membrane of polysulfones which comprises membrane-forming modified polysulfones with repeating units of the formulae

$$(1) \quad -\!\left[ M_1 - R_1 - M_2 - R_2 - SO_2 - R_3 \right]\!-$$

wherein $M_1$ and $M_2$ are independently a valence bond, -O- or -NH-, $R_1$ is a valence bond or a group of the formulae

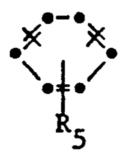 or 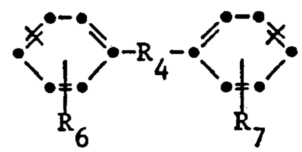 ,

with the proviso that if $R_1$ is a valence bond, $M_1$ and $M_2$ have themeanings indicated but only one of them can be -O-, $R_2$ and $R_3$ are independently a group of the formulae

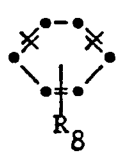 or 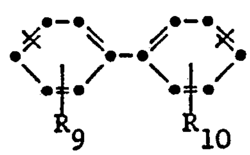 ,

the arylene radicals $R_1$, $R_2$ and $R_3$ are optionally further substituted by alkyl or 1 to 4 carbon atoms, $R_4$ is a valence bond, -O-, alkylene of 1 to 4 carbon atoms, optionally substituted or interrupted by cycloalkyl(ene) or aryl(ene) with at most 7 carbon atoms, or alkylidene of 2 to 4 carbon atoms, $R_5$ to $R_{10}$ are independently hydrogen, or $-R_{11}NH_2$,

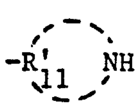

or $-R_{13}OH$ radicals, these radicals being modified through chemical reaction with
(a) a monomeric compound containing at least two functional groups,
(b) a polyfunctional, linear or branched oligomer or polymer, and
(c) a non-ionic or ionic compound containing at least one, preferably two groups capable of reaction with (b),
$-R_{12}X$ or $-R_{13}CHO$ radicals, modified through chemical reaction with (b) and (c), or
$-R_{13}CN$ radicals, modified through chemical reaction with hydroxylamine, (a), (b) and (c),
$R_{11}$ is a valence bond, $-CH_2-$,

$-(CH_2)_p NH(CH_2)_{2-6}-$, $-(CH_2)_p-O(CH_2)_{2-6}-$,

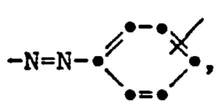, 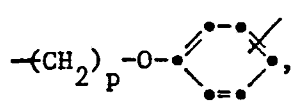, 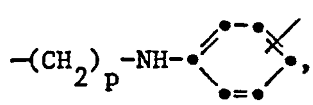, 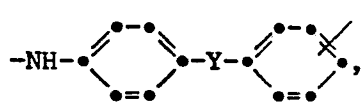,

$R'_{11}$ constitutes the atoms necessary to form a heterocyclic ring condensed with the polymer backbone, $-R_{12}-$ is

$-C_2H_{2n}-$,

$-R_{13}-$ is a valence bond or

$-C_mH_{2m}-$,

X is halogen, Y is -O-, $-SO_2-$ or FIG129/20 n is an integer of 1 to 6, m is an integer of 1 to 5 and p is zero or l, the degree of substitution of substituents $R_5$ to $R_{10}$ - different from hydrogen - being between 0.3 and 3.5 milliequivalents/g.

2. A membrane according to claim 1, wherein the modified polysulfone comprises repeating units of the formula

$$(2) \quad \left[ M_1 - R_1 - M_2 - R_2 - SO_2 - R_3 \right] \quad ,$$

wherein $M_1$ and $M_2$ are -O- or -NH- and $R_1$, $R_2$ and $R_3$ have the meanings indicated in claim 1.

3. A membrane according to claim 1, wherein the modified polysulfone comprises repeating units of the formula

$$(3) \quad \left[ O - R_2 - SO_2 - R_3 \right] \quad ,$$

wherein $R_2$ and $R_3$ have the meanings indicated in claim 1.

4. A membrane according to claim 1, wherein the modified polysulfone comprises repeating units of the formula

$$(4) \quad \left[ R_1 - O - R_2 - SO_2 - R_3 \right] \quad ,$$

wherein $R_1$, $R_2$ and $R_3$ have the meanings indicated in claim 1.

5. A membrane according to claim 1, wherein the modified polysulfone comprises repeating units of the formula

$$(5) \quad \left[ O - R_1 - O - R_2 - SO_2 - R_3 \right] \quad ,$$

wherein

$R_1$ is

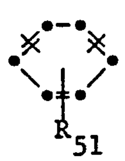 or 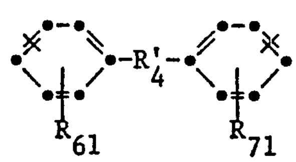 ,

$R_2$ and $R_3$ are independently

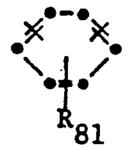

or

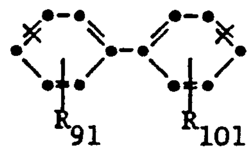

,

$R'_4$ is a valence bond or alkylene or 1 to 4 carbon atoms,

$R_{51}$ to $R_{101}$ are independently hydrogen or $-CH_2NH_2$, $-CH_2OH$or $-NH_2$ radicals, modified through chemical reaction with (a), (b) and (c), -CH X radicals, wherein X is halogen, modified through chemical reaction with (b) and (c), or

$-CH_2CN$ radicals, modified through chemical reaction with hydroxylamine, (a), (b) and (c), the degree of substitution of substituents $R_{51}$ to $R_{101}$ - different from hydrogen - being between 0.3 and 3.5 milliequivalents/g.

6. A membrane according to claim 5, wherein the modified polysulfone has repeating units of the formula

(6) 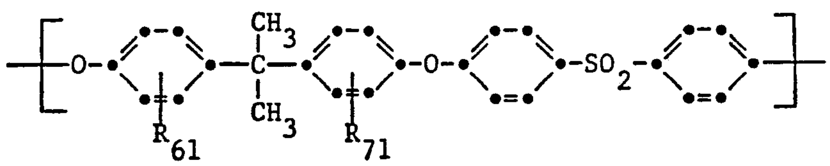

wherein $R_{61}$ und $R_{71}$ have the meaning indicated in claim 5 and the degree of substitution of substituents $R_{61}$ and $R_{71}$ - different from hydrogen-being 0.3 to 3.5 meq/g.

7. A membrane according to claim 6, wherein $R_{61}$ and/or $R_{71}$ comprises $-CH_2NH_2$ groups, modified through chemical reaction with

(a) organic compounds that contain reactive multiple bonds, or epoxide, aziridine, aldehyde, imidate, isocyanate, isothiocyanate, hydroxyl, anhydride, acyl halide, carbonic acid imide halide or N-methylol groups, or with compounds containing substituents detachable as tertiary amines or as anions, or compounds containing combinations of these groups (substituents),

(b) hydrophilic polyfunctional, aliphatic or aromatic oligomers or polymers containing amino, hydroxyl or thiol groups, and

(c) non-ionic compounds or compounds containing at least one sulfonic acid group ($-SO_3H$), or carboxylic acid group (-COOH), optionally in form of their salts, or ammonium group and at least one, preferably two group(s) capable of reacting with component (b),

$-CH_2X$ groups, wherein X is halogen, modified through chemical reaction with components (b) and (c), or

$-CH_2CN$ groups, modified through chemical reaction with hydroxylamine and components (a), (b) and (c).

8. A membrane according to claim 7, wherein component (a) is a cyclic carbonic acid imide halide, an isocyanate, an isothiocyanate or an N-methylol compound.

9. A membrane according to claim 7, wherein component (b) comprises polyethyleneimines, polyvinyl alcohols, cellulose derivatives, polyvinylamines, polyvinylanilines, polydiallylamines, amino modified polyepihalohydrines, condensation products of dicyandiamide, amine (ammonium) salts and formaldehyde, diamino condensation products of polyanhydrides, aminoalkyl polysulfones or aminoalkyl polyphenylene oxides.

10. A memyrane according to claim 7, wherein components (c) is a colored compound.

11. A membrane according to claim 7, wherein component (c) is a colorless non-ionic cyclic carbonic acid imide halide, a dihalide of dicarboxylic acids, a trihalide of tricarboxylic acids or a dialdehyde.

12. A process for the manufacture of a semipermeable membrane according to any one of claims 1 to 11, which comprises casting (I) onto a porous support a solution containing a polysulfone with repeating units of the formula

$$(17) \quad \left[ M_1 - R'_1 - M_2 - R'_2 - SO_2 - R'_3 \right]$$

wherein $M_1$ and $M_2$ are independently a valence bond, -O- or -NH-, $R'_1$ is a valence bond or a group of the formula

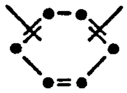 or 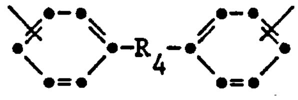 ,

with the proviso that - if $R'_1$ is a valence bond - only one of $M_1$ and $M_2$ may be -O-, $R'_2$and $R'_3$are independently

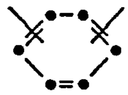 or 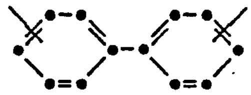 ,

the arylene radicals $R'_1$, $R'_2$ and $R'_3$ are optionally substituted by alkyl of 1 to 4 carbon atoms, $R_4$ is a valence bond, -O-, alkylene of 1 to 4 carbon atoms, optionally substituted or interrupted by cycloalkyl(ene) or aryl(ene) with at most 7 carbon atoms, or alkylidene or 2 to 4 carbon atoms, and

(II) a polar organic solvent or solvent mixture and optionally partial solvents, non-solvents, electrolytes and/or surfactants, and contacting the (non-gelled) membrane with a liquid which is miscible with the polar solvent but is a non-solvent for the membrane to effect coagulation of the membrane, and then introducing

(A) $-R_{11}NH_2$ or $-R_{13}OH$ radicals into the obtained membrane, which are further chemically modified through chemical reaction with

(a) a monomeric compound containing at least two functional groups,

(b) a polyfunctional, linear or branched oligomer or polymer, and

(c) a non-ionic or ionic compound containing at least one, preferably two, group(s) capable of reaction with (b),

(B) $-R_{12}X$ or-$R_{13}CHO$ radicals, which are then modified through chemical reaction with components (b) and (c), or

(C) $-R_{13}CN$ radicals, which are then modified through chemical reaction with hydroxylamine and further with components (a), (b) and (c), wherein $-R_{11}$-, $-R_{12}$-, $-R_{13}$- and X have the meanings indicated in claim 1.

13. A process for the manufacture of a semipermeable membrane according to any one of claims 1 to 11, which comprises casting onto a (porous) support into a membrane a solution of

(I) a membrane-forming polysulfone with repeating units of the formula

$$(18) \qquad \left[ M_1 - R''_1 - M_2 - R''_2 - SO_2 - R''_3 \right]$$

wherein $M_1$ and $M_2$ are independently a valence bond, -O- or -NH-, $R''_1$ is a valence bond, or a group of the formula

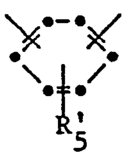 or 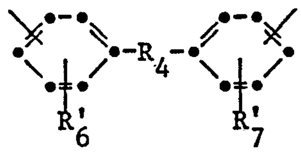 ,

with the proviso that - if $R''_1$ is a valence bond - only one of $M_1$ and $M_2$ may be -O-, $R''_2$ and $R''_3$ are independently

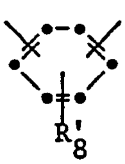 or 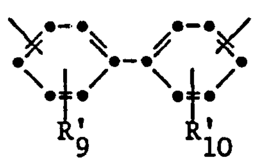 ,

the arylene radicals $R''_1$, $R''_2$ and $R''_3$ are optionally further substituted by alkyl of 1 to 4 carbon atoms, $R_4$ is a valence bond, -O-, alkylene of 1 to 4 carbon atoms, optionally substituted or interrupted by

cycloalkyl(ene) or aryl(ene) with at most 7 carbon atoms, or alkylidene of 2 to 4 carbon atoms, $R'_5$ to $R'_{10}$ are independently hydrogen or
(A) $-R_{11}NH_2$,-

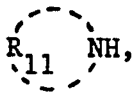

or $-R_{13}OH$ radicals, or
(B) $-R_{12}X$ or $R_{13}CHO$ radicals, or
(C) $-R_{13}CN$ radicals, wherein $-R'_{11}$-, $-R_{12}$-, $-R_{13}$- and X have the meanings indicated in claim 1, the degree of substitution of substituents $R'_5$ to $R'_{10}$ - different from hydrogen - being between 0,3 and 6 milliequivalents/g,
(II) a polar organic solvent or solvent mixture and optionally partial solvents, non-solvents, electrolytes and/or surfactants, and contacting the (non-gelled) membrane with a liquid which is miscible with the polar solvent but is a non-solvent for the membrane to effect coagulation of the membrane, and then modifying the obtained membrane by reacting it with
(a) a monomeric compound containing at least two functional groups, (b) a polyfunctional, linear or branched oligomer or polymer, and (c) a non-ionic or ionic compound containing at least one, preferably
two group(s) capable of reaction with (b), when $R'_5$ to $R'_{10}$ have the meanings of (A),
- with (b) and (c), when $R_5'$ to $R_{10}'$ have the meanings of (B), - and with hydroxylamine, (a), (b) and (c), when $R_5'$ to $R'_{10}$ have
the meanings of (C).

14. A process according to any one of claims 12 and 13, wherein a flat or a tubular membrane or hollow fibres are prepared.

15. Use of the membranes according to any one of claims 1 to II for the separation of monovalent ions of low ionic weight from preferably polyvalent ions of low or high ionic weight or from monovalent ions of high ionic weight.

16. Use according to claim 15, wherein organic and metal-organic ionic substances (ionic dyestuffs) are separated from by-products (salts) in a reaction mixture.

17. Use according to claim 15, wherein effluents obtained from dye production are purified by separating off the dyes.

18. A process for the separation of substances which comprises permeating aqueous solutions containing mixtures of said substances through a membrane according to any one of claims 1 to 11.

19. An ultrafiltration and reverse osmosis process for concentrating and/or purifying of liquids (solutions) or separating of dissolved components which comprises disposing the liquids (solutions) on one side of the membranes according to any one of claims 1 to 11 and filtering the solutions by applying a hydraulic pressure being greater than the osmotic pressure of said solutions.

**Revendications**

1. Membrane semi-perméable de polysulfones, qui comprend des polysulfones modifiées formant une membrane avec des unités répétitives de formules

$$(1) \quad -\!\!\left[ M_1 - R_1 - M_2 - R_2 - SO_2 - R_3 \right]\!\!-$$

dans laquelle $M_1$ et $_2$, indépendamment l'un de l'autre, représentent une liaison de valence, -O- ou -NH-, $R_1$ représente une liaisom de valence ou un groupe de formules

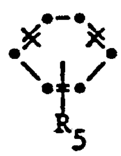 ou 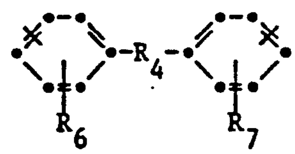 ,

avec la restriction que, lorsque $R_1$ représente une liaison de valence, $M_1$ et $M_2$ ont les significations indiquées mais l'un d'eux seulement peut représenter -O-,$R_2$ et $R_3$, indépendamment l'un de l'autre, représentent un groupe de formules

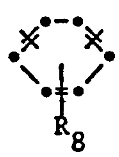 ou 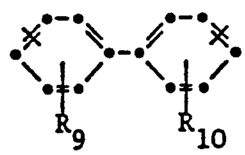 ,

les radicaux arylènes $R_1$, $R_2$ et $R_3$ sont, cas échéant, substitués en outre par un alkyle de 1 à 4 atomes de carbone, $R_4$ représente une liaison de valence, -O-, un alkylène de 1 à 4 atomes de carbone, cas échéant substitué ou interrompu par un cycloalkyl(ène) ou un aryl(ène) avec au maximum 7 atomes de carbone, ou un alkylidène de 2 à 4 atomes de carbone, $R_5$ à $R_{10}$ représentent, indépendamment,
l'hydrogène ou des radicaux-$R_{11}NH_2$,

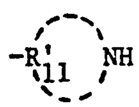

ou -$R_{13}OH$, ces radicaux étant modifiés par une réaction chimique avec
(a) un composé monomère contenant au moins deux groupes fonctionnels,
(b) un oligomère ou un polymère polyfonctionnel, à chaîne droite ou ramifiée, et
(c) un composé non-ionique ou ionique contenant au moins un et de
préférence deux groupes capables de réagir avec (b), des radicaux -$R_{12}X$ ou -$R_{13}CHO$ modifiés par réaction chimique avec (b) et (c), ou des radicaux -$R_{13}CN$ modifiés par réaction chimique avec l'hydroxylamine, (a), (b) et (c),
$R_{11}$ représente une liaison de valence, -$CH_2$-, -$(CH_2)_pNH(CH_2)_{2-6}$, -$(CH_2)_p$ -$O(CH_2)_{2-6}$,

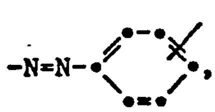, 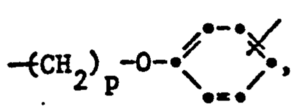, 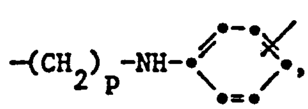, 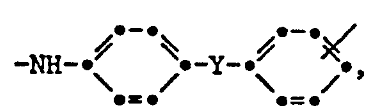,

R'$_{11}$ représente les atomes nécessaires pour former un noyau hétérocyclique condensé avec le squelette du polymère, -$R_{12}$- représente -$C_2H_{2n}$—, -$R_{13}$- représente une liaison de valence ou -$C_mH_{-2m}$—, X représente un halogène, Y représente -O-, -$SO_2$- ou C-$(CH_3)_2$, n est un nombre entier de 1 à 6, m est un nombre entier de 1 à 5 et p est zéro ou 1, le degré de substitution des substituants $R_5$ à $R_{10}$ - lorsqu'ils ne représentent pas l'hydrogène - se situant entre 0,3 et 3,5 milliéquivalents/g.

2. Membre selon la revendication I, dans laquelle la polysulfone modifiée comprend des unités répétitives de formule

(2) $\left[ M_1 - R_1 - M_2 - R_2 - SO_2 - R_3 \right]$ ,

dans laquelle $M_1$ et $M_2$ représentent -O- ou -NH- et $R_1$, $R_2$ et $R_3$ ont les significations mentionnées à la revendication 1.

3. Membrane selon la revendication I, dans laquelle la polysulfone modifiée comprend des unités répétitives de formule

(3) $\left[ O - R_2 - SO_2 - R_3 \right]$ ,

dans laquelle $R_2$ et $R_3$ ont les significations mentionnées à la revendication 1.

4. Membrane selon la revendication I, dans laquelle la polysulfone modifiée comprend des unités répétitives de formule

(4) $\left[ R_1 - O - R_2 - SO_2 - R_3 \right]$ ,

dans laquelle $R_1$, $R_2$ et $R_3$ ont les significations mentionnées à la revendication 1.

5. Membrane selon la revendication I, dans laquelle la polysulfone modifiée comprend des unités répétitives de formule

(5) $\left[ O - R_1 - O - R_2 - SO_2 - R_3 \right]$ ,

dans laquelle $R_1$ représente

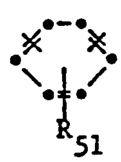 ou 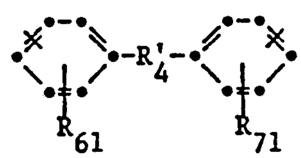 ,

$R_2$ et $R_3$ représentent indépendamment

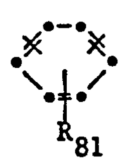 ou 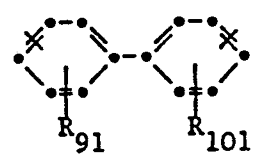 ,

$R_4'$ représente une liaison de valence ou un alkylène de 1 à 4 atomes de carbone, $R_{51}$ à $R_{101}$ représentent indépendamment l'hydrogène ou des radicaux $-CH_2NH_2$, $-CH_2OH$ ou $-NH_2$ modifiés par réaction chimique avec (a), (b) et (c), des radicaux $-CH_2X$, dans lesquels X représente un halogène, modifiés par réaction chimique avec (b) et (c), ou des radicaux $-CH_2CN$ modifiés par réaction chimique avec l'hydroxylamine, (a), (b) et (c), le degré de substitution des substituants $R_{51}$ à $R_{101}$ - lorsqu'ils ne représentent pas l'hydrogène - se situant entre 0,3 et 3,5 milliéquivalents/g.

6. Membrane selon la revendication 5, dans laquelle la polysulfone modifiée comprend des unités répétitives de formule

(6) 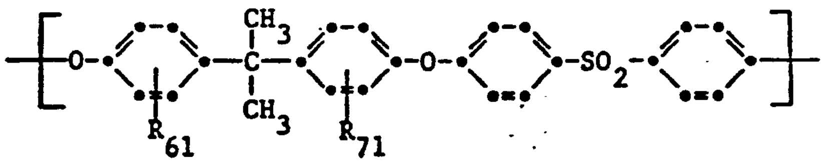

dans laquelle $R_{61}$ et $R_{71}$ ont les significations mentionnées à la revendication 5 et le degré de substitution des substituants $R_{61}$ et $R_{71}$ - lorsqu'ils ne représentent pas l'hydrogène - se situant de 03 à 3,5 milliéquivalents/g.

7. Membrane selon la revendication 6, dans laquelle $R_{61}$ et/ou $R_{71}$ comprennent des groupes $-CH_2NH_2$ modifiés par réaction chimique avec

(a) des composés organiques qui contiennent de multiples liaisons réactives, ou un époxyde, une aziridine, un aldéhyde, un imidate, un isocyanate, un isothiocyanate, un hydroxyle, un anhydride, un halogénure d'acyle, un halogénure d'imide d'acide carbonique ou des groupes N-méthylols, ou avec des composés contenant des substituants capables d'être scindés sous forme d'amines tertiaires ou d'anions, ou des composés contenant des combinaisons de ces groupes (substituants),

(b) des oligomères ou polymères hydrophiles polyfonctionnels, aliphatiques ou aromatiques, contenant des groupes amino, hydroxyle ou thiol, et

(c) des composés non-ioniques ou des composés contenant au moins un groupe acide sulfonique ($-SO_3H$) ou un groupe acide carboxylique (-COOH), cas échéant sous forme de leurs sels, ou un groupe ammonium et au moins un et de préférence deux groupes capables de réagir avec le composant (b),

des groupes $-CH_2X$ dans lesquels X représente un halogéne, modifiés par réaction chimique avec des composants (b) et (c), ou

des groupes $-CH_2CN$ modifiés par réaction chimique avec l'hydroxyamine et des composants (a), (b) et (c).

8. Membrane selon la revendication 7, dans laquelle le composant (a) est un halogénure d'imide d'acide carbonique cyclique, un isocyanate, un isothiocyanate ou un composé N-méthylol.

9. Membrane selon la revendication 7, dans laquelle le composant (b) comprend des polyéthylèneimines, des alcools polyvinyliques, des dérivés de cellulose, des polyvinylamines, des polyvinylanilines, des polydiallylamines, des polyépihalogènehydrines modifiées par un amino, des produits de condensation de dicyanodiamide, de sels d'amine (d'ammonium) et de formaldéhyde, des produits de condensation diamino de polyanhydrides, des aminoalkyle polysulfones ou des oxydes d'aminoalkyle polyphénylène.

10. Membrane selon la revendication 7, dans laquelle le composant (c) est un composé coloré.

11. Membrane selon la revendication 7, dans laquelle le composant (c) est un halogénure d'imide d'acide carbonique cyclique non-ionique incolore, un dihalogénure d'acides dicarboxyliques, un trihalogénure d'acides tricarboxyliques ou un dialdéhyde.

12. Procédé de préparation d'une membrane semi-perméable selon l'une quelconque des revendications 1 à 11, qui comprend le moulage

(I) sur un support poreux d'une solution contenant une polysulfone avec des unités répétitives de formule

$$(17) \quad -\!\!\left[ M_1 - R'_1 - M_2 - R'_2 - SO_2 - R'_3 \right]\!\!-$$

dans laquelle $M_1$ et $M_2$, indépendamment l'un de l'autre, représentent une liaison de valence, -O- ou -NH-, $R'_1$ représente une liaison de valence ou un groupe de formule

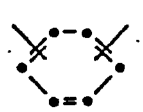 ou 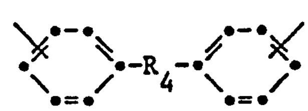 ,

avec la restriction que, lorsque $R'_1$ représente une liaison de valence, l'un seulement de $M_1$ et $M_2$ peut représenter -O-, $R'_2$ et $R'_3$ sont, indépendamment